(19) Europäisches Patentamt
European Patent Office
Office européen des brevets

(11) **EP 4 741 903 A1**

(12) **EUROPEAN PATENT APPLICATION**
published in accordance with Art. 153(4) EPC

(43) Date of publication:
**13.05.2026 Bulletin 2026/20**

(21) Application number: **24899370.1**

(22) Date of filing: **30.08.2024**

(51) International Patent Classification (IPC):
**G02B 13/00** (2006.01)    **G02B 27/64** (2006.01)
**H04N 23/68** (2023.01)

(52) Cooperative Patent Classification (CPC):
**G02B 7/09; G02B 7/18; G02B 7/182; G02B 13/00;
G03B 5/00; G03B 30/00;** G02B 27/64; H04N 23/68

(86) International application number:
**PCT/CN2024/116143**

(87) International publication number:
**WO 2025/118724 (12.06.2025 Gazette 2025/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.12.2023 CN 202311648143**

(71) Applicant: **Huawei Technologies Co., Ltd.
Shenzhen, Guangdong 518129 (CN)**

(72) Inventors:
• **WANG, Heng
Shenzhen, Guangdong 518129 (CN)**
• **NIU, Yajun
Shenzhen, Guangdong 518129 (CN)**
• **MIYATANI, Sota
Shenzhen, Guangdong 518129 (CN)**
• **TANG, Wei
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **OPTICAL LENS, CAMERA MODULE AND ELECTRONIC DEVICE**

(57) An optical lens (10), a camera module (100), and an electronic device (1000) are provided. The optical lens (10) includes a front lens element group, a first reflector (18), and a rear lens element group that are sequentially arranged in a direction from an object side to an image side. The first reflector (18) is configured to reflect a ray from the front lens element group to the rear lens element group. The front lens element group is a fixed lens element group, and the first reflector (18) is rotatably disposed in the lens, to implement optical image stabilization.

FIG. 6

**Description**

This application claims priority to Chinese Patent Application No. 202311648143.9, filed with the China National Intellectual Property Administration on December 4, 2023 and entitled "OPTICAL LENS, CAMERA MODULE, AND ELECTRONIC DEVICE", which is incorporated herein by reference in its entirety.

**TECHNICAL FIELD**

This application relates to the field of photographing device technologies, and in particular, to an optical lens, a camera module, and an electronic device.

**BACKGROUND**

With progress of science and technology and economic development, people have increasingly higher requirements on a camera function of a portable electronic device. A camera module configured in the electronic device is required to implement long-focus shooting, and the electronic device is further required to have an optical image stabilization (optical image stabilization, OIS) function, to improve photographing quality and improve photographing experience of a user.

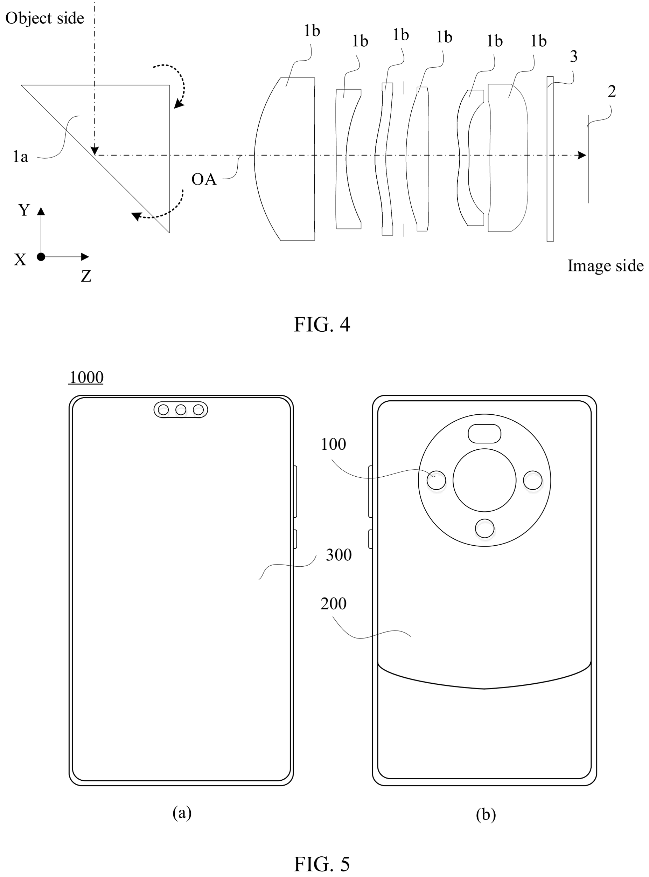

FIG. 4 shows an optical lens having an optical image stabilization function. The optical lens includes a prism 1a and a plurality of lens elements 1b disposed on an image side of the prism 1a. The plurality of lens elements 1b form an imaging lens element group and image rays onto an image sensor 2. An image stabilization motor (not shown in the figure) may drive the prism 1a to perform shake compensation, to improve shooting quality.

Currently, to facilitate image stabilization design, the prism 1a is usually arranged at an object side edge of an optical path, and the plurality of lens elements 1b used for imaging are arranged on the image side of the prism 1a. Because there are a large quantity of lens elements 1b and the lens elements 1b need to be arranged at intervals to implement auto focus, the optical lens has a large size in a Z-axis direction in FIG. 4, that is, the optical lens is long. This is unfavorable to internal structure design of the electronic device.

**SUMMARY**

Embodiments of this application provide an optical lens, a camera module, and an electronic device, so that when normal optical image stabilization is implemented, a size of the optical lens in a Z-axis direction can be reduced, that is, a length of the optical lens can be reduced, to facilitate internal structure design of the electronic device.

According to a first aspect, an optical lens is provided, including a front lens element group, a first reflector, and a rear lens element group that are sequentially arranged in a direction from an object side to an image side, where the first reflector is configured to reflect a ray from the front lens element group to the rear lens element group; and the front lens element group is a fixed lens element group, and the first reflector is rotatably disposed in the lens, to implement optical image stabilization.

In the optical lens provided in this embodiment of this application, the front lens element group is disposed on an object side of the first reflector, and the front lens element group includes at least one lens element. In other words, some lens elements of the optical lens may be disposed on the object side of the first reflector, but not all lens elements are disposed on an image side of the first reflector. In this way, because fewer lens elements are disposed on the image side of the optical lens, a size of the optical lens in a Z-axis direction can be reduced. That is, a length of the optical lens can be reduced. In this way, arrangement space of another component in an electronic device is expanded, an internal structure of the electronic device is effectively optimized, and difficulty in structure design and layout in the electronic device is reduced. This facilitates miniaturization and slimness design of the electronic device, and can improve user experience.

The first reflector is configured to reflect a ray from the front lens element group to the rear lens element group, so that the optical lens can implement a periscope-type structural layout. The first reflector is rotatably disposed in the lens, and can rotate under driving of an image stabilization motor, to implement optical image stabilization and improve shooting quality of the optical lens. Because the front lens element group is a fixed lens element group, when performing optical image stabilization, the image stabilization motor needs to drive only the first reflector, and does not need to drive the front lens element group or the rear lens element group. Therefore, moving components for optical image stabilization are simplified, so that a workload of the image stabilization motor is small, a design requirement for the motor is reduced, and design of the image stabilization motor and a camera module becomes easier. However, because a lens element does not participate in shake compensation, a quantity of movable lens elements can be reduced, so that more lens elements can be fixedly disposed on an optical path, and relative positions of more lens elements become fixed. In this way, impact of a tolerance on an imaging point can be reduced, and imaging stability can be improved, so that the optical lens provided in this embodiment of this application has good imaging quality and high imaging definition.

According to the optical lens provided in this embodiment of this application, design of a lens structure is optimized, so that when normal optical image stabilization is implemented, the size of the optical lens in the Z-axis direction can be reduced, that is, the length of the optical lens can be reduced, to facilitate internal structure design of the electronic device. The optical lens can further make it easy to design the image stabilization motor and the camera module, and has good imaging quality.

In a possible implementation, the optical lens has an emergent optical axis located on an image side of a center point of the first reflector, and the first reflector is configured to rotate about a rotation point. A projection point of the rotation point on a straight line on which the emergent optical axis lies is located on the emergent optical axis; or the projection point of the rotation point on the straight line on which the emergent optical axis lies is located on a reverse extension line of the emergent optical axis, and an effective focal length EFL of the optical lens and a distance L between the projection point and the center point satisfy: L/EFL≤2.0.

In this embodiment of this application, a position of the rotation point is properly selected, so that integrity of an optical path can be ensured. Therefore, when the first reflector rotates at different positions, it can be ensured that a ray is reliably reflected to the rear lens element group, a ray loss caused by image stabilization is reduced or avoided, and small positional differences of rays to arrive at lens elements can be ensured. In this application, the foregoing setting can ensure that an amount of rays reflected by the first reflector to the rear lens element group does not vary significantly in different image stabilization states (that is, at different positions), that is, can ensure that imaging definition does not vary significantly in different image stabilization states, and ensure that the optical lens always has good imaging quality.

In a possible implementation, the first reflector is configured to perform image stabilization on a pitch axis and image stabilization on a yaw axis, and the rotation point is an intersection point of the pitch axis and the yaw axis.

In a possible implementation, the rear lens element group is configured to move along the emergent optical axis as a whole to implement auto focus.

In a possible implementation, the rear lens element group includes a first lens element group and a second lens element group, and the first lens element group or the second lens element group is configured to move along the emergent optical axis, to implement auto focus.

In this application, a distance between the first lens element group and the second lens element group is changed, so that the optical lens can not only implement long-distance shooting and good imaging quality, but also have a strong close-up shooting capability, to implement wide-object-distance imaging from a distant scene to a close-up scene. However, in a single-group focusing manner, a motion manner of a focusing structure of the optical lens can be simplified, to simplify a focusing method.

In a possible implementation, a focal length of the first lens element group is positive, and a focal length of the second lens element group is negative.

According to the foregoing setting, the optical lens can obtain better macro shooting performance.

In a possible implementation, the first lens element group includes at least two lens elements, an Abbe number of at least one lens element is less than 45, and the second lens element group includes at least one lens element.

According to the foregoing setting, the optical lens can obtain better macro shooting performance, and can balance various aberrations, to help improve imaging quality.

In a possible implementation, a focal length F1 of the front lens element group and an overall focal length Fs of the optical lens satisfy: |F1/Fs|>1.2.

That is, an absolute value of a ratio of F1 to Fs is greater than 1.2. The foregoing setting can ensure that an amount of rays reflected by the first reflector to the rear lens element group does not vary significantly in different image stabilization states (that is, at different positions), that is, can ensure that imaging definition does not vary significantly in different image stabilization states, and ensure that the optical lens 10 always has good imaging quality.

In a possible implementation, the optical lens further includes a second reflector located on an image side of the rear lens element group, and the second reflector is configured to deflect a ray from the rear lens element group.

In this embodiment, two reflectors are disposed to deflect propagation angles of rays, so that an arrangement direction of an image sensor can be flexibly adjusted, to better utilize space. In this case, the rays may be deflected, and a plane on which the image sensor is located can be parallel to a display of the electronic device. Therefore, disposing of the image sensor is no longer limited to a thickness size of the electronic device, and an image sensor of a larger size can be disposed, to help improve imaging quality.

Optionally, the second reflector may be a mirror or a prism.

In a possible implementation, a field of view of the optical lens is less than 60°.

The optical lens provided in this application has a small field of view, to obtain a strong distant shooting capability and good imaging quality in distant shooting.

In a possible implementation, an image height of the optical lens is greater than 2 millimeters.

The optical lens provided in this application has a large sensor panel size, to obtain a strong distant-shooting capability and good imaging quality in distant shooting.

In a possible implementation, a focal length of the rear lens element group is positive.

In a possible implementation, the first reflector is a mirror or a prism.

According to a second aspect, a camera module is provided, including an image stabilization motor and the optical lens provided in any one of the possible implementations of the first aspect. The image stabilization motor is configured to drive the first reflector to implement optical image stabilization.

Optionally, the camera module further includes an image sensor located on an image side of the optical lens.

Optionally, the image stabilization motor may be any one of a voice coil motor, a piezoelectric motor, a shape memory alloy motor, a MEMS motor, a wire-suspended motor, a ball motor, or the like.

According to a third aspect, an electronic device is provided, including a pose sensor, a processing unit, and the camera module provided in the second aspect. The pose sensor is configured to collect shake information of the electronic device, and send the shake information to the processing unit, and the processing unit is configured to control the image stabilization motor based on the shake information.

Optionally, the pose sensor includes but is not limited to a gyroscope, an accelerometer, an inertia sensor, a Hall sensor, a magnetic encoder, or the like. For example, the pose sensor may be a micro electro mechanical system gyroscope.

## BRIEF DESCRIPTION OF DRAWINGS

FIG. 1 is a shooting effect comparison diagram of a camera module without an optical image stabilization function and a camera module with an optical image stabilization function;

FIG. 2 is a diagram of a principle of five-axis optical image stabilization;

FIG. 3 is a diagram of principles of lens optical image stabilization and image sensor optical image stabilization;

FIG. 4 is a diagram of a structure of a camera module in the conventional technology;

FIG. 5 is a diagram of a structure of an electronic device according to an embodiment of this application;

FIG. 6 is a diagram of a structure of a camera module according to Embodiment 1 of this application;

FIG. 7 is a control principle diagram of optical image stabilization performed by an electronic device according to an embodiment of this application;

FIG. 8 is a diagram of two different arrangement positions of a rotation point of a first reflector;

FIG. 9 is a diagram of a manner of forming a rotation point of a first reflector;

FIG. 10 is a diagram of an optical path when a camera module focuses on a distant scene according to Embodiment 1 of this application;

FIG. 11 is a diagram of an optical path when a camera module focuses on a close-up scene according to Embodiment 1 of this application;

FIG. 12 is a simulation effect diagram of an optical lens during focusing on the distant scene shown in FIG. 10;

FIG. 13 is a simulation effect diagram of an optical lens during focusing on the close-up scene shown in FIG. 11;

FIG. 14 is a diagram of a structure of a camera module according to Embodiment 2 of this application;

FIG. 15 is a simulation effect diagram of an optical lens during focusing on a distant scene shown in FIG. 14;

FIG. 16 is a diagram of a structure of a camera module during focusing on a distant scene according to Embodiment 3 of this application;

FIG. 17 is a diagram of a structure of a camera module during focusing on a close-up scene according to Embodiment 3 of this application;

FIG. 18 is a simulation effect diagram of an optical lens during focusing on the distant scene shown in FIG. 16;

FIG. 19 is a simulation effect diagram of an optical lens during focusing on the close-up scene shown in FIG. 17;

FIG. 20 is a diagram of a structure of a camera module during focusing on a distant scene according to Embodiment 4 of this application;

FIG. 21 is a diagram of a structure of a camera module during focusing on a close-up scene according to Embodiment 4 of this application;

FIG. 22 is a simulation effect diagram of an optical lens during focusing on the distant scene shown in FIG. 20; and

FIG. 23 is a simulation effect diagram of an optical lens during focusing on the close-up scene shown in FIG. 21.

Reference numerals:

1: lens; 1a: reflector; 1b: lens element; 2: image sensor; 3: infrared filter;

10: optical lens; 11: first lens element; 12: second lens element; 13: third lens element; 14: fourth lens element; 15: fifth lens element; 16: sixth lens element; 17: seventh lens element; 18: first reflector; 19: aperture stop; 20: image sensor;

21: second reflector; 30: filter; 40: image stabilization motor; 41: drive unit;

100: camera module; 200: rear cover; 300: display; 400: side frame; 500: pose sensor; 600: processing unit; 1000: electronic device;

G1: first lens element group; G2: second lens element group; OA: optical axis; OA1: emergent optical axis; OA2: incident optical axis; P1: rotation point; P2: center point of a reflection surface; P3: projection point; S1: first rotating shaft; S2: second rotating shaft.

## DESCRIPTION OF EMBODIMENTS

The following describes implementations of this application in detail. Examples of the implementations are shown in the accompanying drawings. Same or similar reference signs are always used to represent same or similar elements or elements having same or similar functions. The implementations described below with reference to the accompanying drawings are examples, and are merely used to explain this application, but cannot be understood as a limitation on this application.

In the descriptions of this application, it should be noted that, unless otherwise specified and limited, terms "mounting", and "connection" should be understood in a broad sense. For example, a connection may be a fastened connection, a detachable connection, or an integrated connection. Alternatively, a connection may be a mechanical connection or an electrical connection, or may mean mutual communication. Alternatively, a connection may be a direct connection, or an indirect connection through an intermediate medium, or may be a connection between two elements or an interaction relationship between two elements. A person of ordinary skill in the art may understand specific meanings of the foregoing terms in this application based on specific situations.

In the descriptions of this application, it should be understood that an orientation or a position relationship indicated by terms such as "up", "down", "side", "front", and "rear" is an orientation or a position relationship based on mounting, and is merely intended to describe this application and simplify the description, but is not intended to indicate or imply that a described apparatus or element needs to have a specific orientation or needs to be constructed and operated in a specific orientation. Therefore, such terms shall not be understood as a limitation on this application.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments of this application, unless otherwise specified, "a plurality of' means two or more than two.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

For ease of understanding, the following first explains and describes technical terms in this application.

Lens: The lens is a component that uses a lens element refraction principle to enable a ray of a scene to pass through the lens to form a clear image on a focusing plane.

Optical axis (optical axis, OA): The optical axis is a direction of a ray transmitted by an optical system. Refer to a chief ray of a center field of view. For a symmetric transmission system, the optical axis usually coincides with a rotation center line of the optical system. For off-axis and reflective systems, the optical axis is also presented as a broken line.

Object side and image side: With a lens element as a boundary, a side on which a photographed object is located is an object side, and a surface that is on the lens element and that is close to the object side may be referred to as an object-side surface. With the lens element as a boundary, a side on which an image of the photographed object is located is an image side, and the surface that is on the lens element and that is close to the image side may be referred to as an image-side surface.

Aperture (aperture): The aperture is an apparatus configured to control an amount of rays passing through a lens and entering a photosensitive surface in a body of a camera, and is usually inside the lens. A size of the aperture is indicated by an F-number.

Aperture F (Fno) number: equal to a focal length of a lens divided by an entrance pupil diameter. When the focal length of the lens remains unchanged, a larger entrance pupil diameter indicates a larger aperture, a smaller aperture F-number, a larger amount of incoming light, a brighter image, and a more blurred background of a subject. On the contrary, a smaller entrance pupil diameter indicates a smaller aperture, a larger aperture F-number, a smaller amount of incoming light, a darker image, and a clearer foreground and background of the subject.

Focal length (focal length): The focal length is also referred to as focal distance, is a measure of how strongly an optical system converges or diverges light, and is a distance from an optical center of a lens element or a lens element group to a focal point when an infinitely distant scene forms a clear image through the lens element or the lens element group on a focal plane, or may be understood as a vertical distance from an optical center of the lens element or the lens element group to the focal plane. From a practical perspective, the focal length may be understood as a distance from a center of a lens to an imaging plane.

Effective focal length (effective focal length, EFL): a distance from a main plane of an optical system to a corresponding focus point.

Focus (focus): Focus is also referred to as light focusing or convergence. Focus is a process of changing positions of an object distance and an image distance by using a camera focusing mechanism, so that a photographed object is clearly imaged. Generally, a digital camera has a plurality of focusing modes: an auto focusing mode, a manual focusing mode, a multi-focus mode, or the like.

Auto focus (auto focus, AF): The auto focus is imaging and receiving reflected light, based on a light reflection principle of a photographed object, on an image sensor after the light passes through a lens; then, obtaining an object distance of the photographed object by computer processing; and subsequently, moving the lens automatically based on the object distance to complete focus adjustment. The auto focus is to make images of objects at different distances clear on an image sensor. A camera module usually controls, by using a drive structure such as a voice coil motor (voice coil motor, VCM), an optical lens to move forward and backward in an optical axis direction, to adjust a distance between the lens and an image sensor, so as to implement auto focus.

Field of view (field of view, FOV): also referred to as a viewing field. In an optical instrument, an included angle formed by a lens of the optical instrument as a vertex and two edges of a maximum range that is of an object image of a photographed object and that can pass through the lens is referred to as a field of view.

Refractive index: If a ray enters a non-absorbent homogeneous material, light reflection and refraction occur at a boundary of the material. The refractive index n is equal to a ratio of a speed c of light in a vacuum to a speed v of light in a medium. In practice, the refractive index is measured by measuring a refraction angle caused by refraction of a beam on a boundary. A formula for describing the refraction angle is referred to as the Snell's (Snell) law.

Aperture stop (aperture stop, STO): is a diaphragm (diaphragm) that limits a maximum inclination angle of a marginal ray in an imaging beam of an on-axis point, that is, a diaphragm with a minimum incident aperture angle. Herein, the diaphragm is an edge, a frame, or a specially disposed barrier with a hole of an optical element in an optical component that is used to limit a size of an imaging beam or an imaging space unit.

Dispersion (dispersion): A property that a refractive index of a material varies with a frequency of incident light is referred to as "dispersion". For example, when sunlight passes through a prism, a continuous color spectrum arranged in order from red to purple is formed. In a broad sense, dispersion not only refers to decomposition of optical waves into a spectrum, but also refers to any physical quantity that varies with frequency (or wavelength). In embodiments of this application, after polychromatic light enters a lens element, because the lens element has different refractive indexes for light of various frequencies, and propagation directions of various colored light are deflected to different degrees, the polychromatic light is dispersed separately when leaving the lens element. This is referred to as "dispersion".

Dispersion coefficient: The dispersion coefficient is an important indicator for measuring imaging quality of a lens element and is usually represented by an Abbe number. Therefore, the dispersion coefficient is also referred to as an Abbe number. A larger dispersion coefficient (Abbe number) indicates less obvious dispersion and better imaging quality of a lens element. A smaller dispersion coefficient (Abbe number) indicates more obvious dispersion and poorer imaging quality of a lens element.

Aberration (aberration): A paraxial region of an optical system has a property of an ideal optical system. A paraxial ray emitted from a point on an object intersects an image plane at one point (that is, a paraxial image point). However, rays actually passing through different apertures of a lens can hardly perfectly intersect at one point. Instead, there are deviations from the position of the paraxial image point. These deviations are collectively referred to as aberrations.

An axial chromatic aberration (longitudinal spherical aber) is also referred to as longitudinal chromatic aberration, positional chromatic aberration, or axial aberration. A beam of rays parallel to an optical axis converges at different positions after passing through a lens. This aberration is referred to as positional chromatic aberration or axial chromatic aberration. This is because positions of images formed by the lens for light of different wavelengths are different, so that image focal planes of light of different colors cannot overlap during final imaging, and polychromatic light is dispersed to form dispersion.

Distortion (distortion): also referred to as image distortion, is a degree at which an image formed by an optical system for an object is distorted relative to the object. A distortion is caused because a height of a point at which chief rays with different fields of view intersect a Gaussian image plane after the chief rays pass through the optical system is not equal to an ideal image height due to impact of a diaphragm spherical aberration, and a difference between the two heights is a distortion. Therefore, a distortion only changes an imaging position of an off-axis object point on an ideal plane, so that a shape of an image is distorted, but definition of the image is not affected.

Image height (image height, ImgH): The image height indicates a half of a diagonal length of an effective pixel region on a photosensitive chip, that is, an image height of an imaging surface.

Astigmatism (astigmatism): Because an object point is not on an optical axis of an optical system, a beam emitted by the object point has an oblique angle to the optical axis. After the beam is refracted by a lens element, convergence points of a meridian pencil and a sagittal pencil are not a same point. That is, the beam cannot be focused at one point, and imaging is not clear, resulting in astigmatism. The meridian pencil and the sagittal pencil are names of beams in two vertical planes in a rotationally symmetrical optical system.

Curvature of field (curvature of field): The curvature of field indicates a difference in an optical axis direction between a position of the clearest image point in a non-central field of view ray passing through an optical lens group and a position of the clearest image point in a central field of view. When a lens element has a curvature of field, an intersection point of an entire beam does not coincide with a desirable image point. Although a clear image point can be obtained at each specific point, an entire image plane is a curved surface.

With progress of science and technology and economic development, people have increasingly higher requirements on a camera function of a portable electronic device. A camera module configured in the electronic device is required to implement background blurring and clear shooting at night, and the electronic device is further required to have an optical image stabilization (optical image stabilization, OIS) function, to improve photographing quality and improve photographing experience of a user.

When the user takes a photo or records a video by using the camera module of the electronic device, a captured image is easily blurred due to shake of a hand, shake of a photographed object, or a limitation of a photographing optical environment. An optical image stabilization technology can well resolve this problem. Optical image stabilization is a technology in which an optical component such as a lens is disposed in an imaging instrument such as a camera, to avoid or reduce an instrument shake that occurs in a process of capturing an optical signal, so as to improve imaging quality. A common method is to detect a shake by using a gyroscope, and then perform reverse-direction translation and rotation of a lens or an image sensor by using an actuator such as a voice coil motor, to compensate for image blurring caused by shaking of an imaging instrument device during exposure.

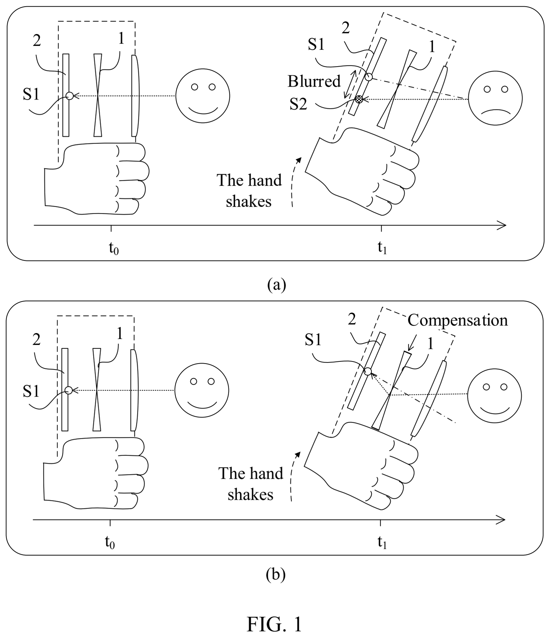

FIG. 1 is a shooting effect comparison diagram of a camera module without an optical image stabilization function and a camera module with an optical image stabilization function. A part (a) in FIG. 1 is a shooting effect diagram of the camera module without the optical image stabilization function, and a part (b) in FIG. 1 is a shooting effect diagram of the camera module with the optical image stabilization function.

As shown in the part (a) in FIG. 1, at a moment t0, a ray is refracted by a lens 1 and then is emitted to an image sensor 2. In this case, because both a hand and a photographed object are in a static state, a captured image is very ideal. At a moment t1, because a hand of a user shakes, and an entire camera module tilts and shakes, a ray that intends to be emitted to an imaging point S1 in the figure is deflected and is emitted to an imaging point S2. Consequently, a captured image is very blurred, and user experience is affected.

As shown in the part (b) in FIG. 1, after the electronic device has the optical image stabilization function, after a gyroscope configured in the electronic device detects that the device shakes, the electronic device may perform reverse-translation or rotation on the lens 1 by using an image stabilization motor, to perform shake compensation, that is, compensate for image blurring caused by shaking during exposure. In this case, the lens 1 is moved by the image stabilization motor, so that it can be ensured that a ray that intends to be emitted to the imaging point S1 in the figure is not deflected to another position. This ensures photographing quality and improves photographing experience of the user.

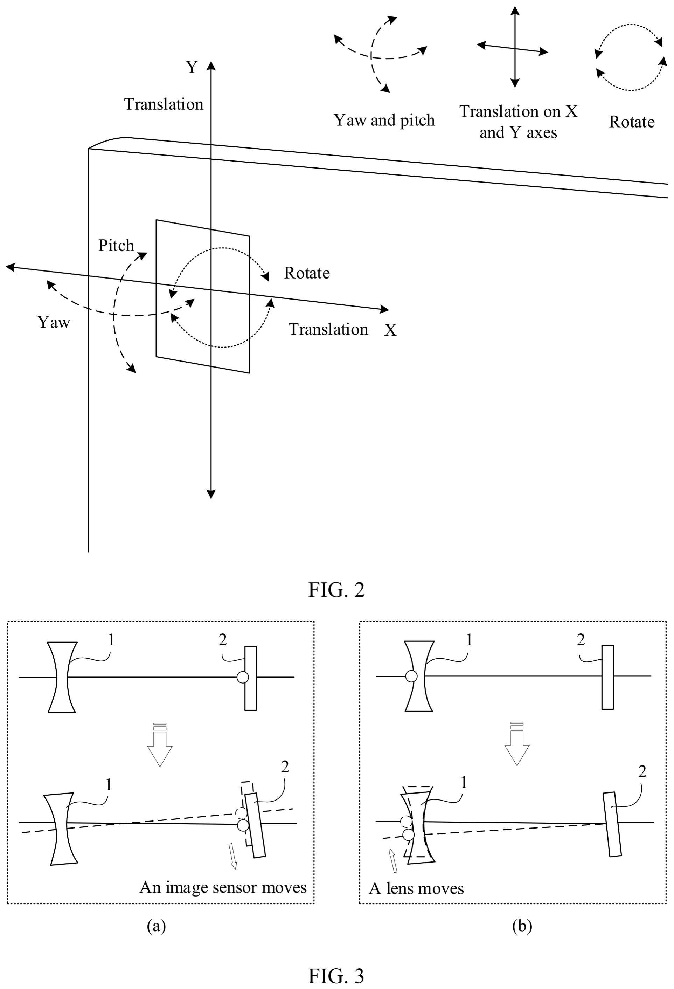

FIG. 2 is a diagram of a principle of five-axis optical image stabilization. As shown in FIG. 2, to perform shake compensation as much as possible to ensure shooting quality, after a shake condition of an electronic device is detected by using a sensor such as a gyroscope, reverse-motion compensation on five axes: X-axis translation, Y-axis translation, roll (Roll), yaw (Yaw), and pitch (Pitch) needs to be performed for a lens (Lens) or an image sensor (Sensor) in a camera, so that the lens and the image sensor remain stationary in the electronic device during photographing, and implement an image stabilization function during photographing.

In practical application, due to limitations of physical conditions, it is usually necessary to combine a plurality of actuators (Actuator) to implement full 5-axis reverse-motion compensation. For example, lens optical image stabilization (Lens OIS) is used for image stabilization on pitch (Pitch) and yaw (Yaw) axes, and image sensor optical image stabilization (Sensor OIS) is used for image stabilization on X, Y, and roll (Roll) axes.

Optical image stabilization can be classified into two types: lens optical image stabilization (Lens OIS) by moving a lens and sensor optical image stabilization (Sensor OIS) by moving an image sensor. FIG. 3 is a diagram of principles of lens optical image stabilization and image sensor optical image stabilization. A part (a) in FIG. 3 is a diagram of a principle of image sensor optical image stabilization in a camera module, and a part (b) in FIG. 3 is a diagram of a principle of lens optical image stabilization.

As shown in the part (a) in FIG. 3, in image sensor optical image stabilization, optical image stabilization is implemented by moving an image sensor 2, and X/Y/Roll axis image stabilization may be implemented. However, in this solution, an electrical signal of the image sensor 2 needs to be moved, technical difficulty is high, and a module size is also increased. As shown in the part (b) in FIG. 3, in lens optical image stabilization, optical image stabilization is implemented by moving a lens 1. This is easy to implement and no electrical signal needs to be moved. Lens optical image stabilization usually implements two-axis image stabilization on the yaw (Yaw) axis and the pitch (Pitch) axis.

Embodiments of this application mainly relate to technical improvement of a lens optical image stabilization solution. The following continues to describe lens optical image stabilization by using a camera module shown in FIG. 4 as an example. As shown in FIG. 4, the camera module includes a prism 1a, an imaging lens element group including a plurality of lens elements 1b, a filter 3, an image sensor 2, and the like that are sequentially arranged in an optical axis OA direction. Rays from an object side are incident to the prism 1 in a Y direction (that is, a thickness direction of a mobile phone), are deflected by 90° through a reflecting surface of the prism 1, sequentially pass through the imaging lens element group for convergence and the filter 3 for filtering in a Z-axis direction (that is, a length direction of the mobile phone), and then form an image on the image sensor 2.

The camera module further includes an image stabilization motor (not shown in the figure), and the image stabilization motor is configured to drive the prism 1a to perform shake compensation, to improve shooting quality. As shown in FIG. 4, the image stabilization motor may drive the prism 1a to rotate about a Y axis in the figure, that is, drive the right-angle prism 1a to perform a yaw motion, to implement image stabilization on the yaw axis. In addition, the image stabilization motor may further drive the prism 1a to rotate about an X axis that is perpendicular to the paper in the figure, that is, drive the prism 1a to perform a pitch-up (pitch-down) motion, to implement image stabilization on the pitch axis. In some cases, the image stabilization motor may simultaneously drive the prism 1a to rotate about the yaw axis and the pitch axis, to achieve better optical image stabilization effect. In this case, under driving of the image stabilization motor, the right-angle prism 1a rotates about an intersection point of the yaw axis and the pitch axis, and the intersection point of the yaw axis and the pitch axis is a rotation point of the prism 1a.

In the optical lens shown in FIG. 4, to facilitate image stabilization design, the prism 1a is usually disposed on an object side (outside) edge of an optical path, and the plurality of lens elements 1b used for imaging are disposed on an image side (inside) of the prism 1a. Because there are a large quantity of lens elements 1b and the lens elements 1b need to be arranged at intervals to implement auto focus, the optical lens has a large size in the Z-axis direction, that is, the optical lens is long. This is unfavorable to internal structure design of the electronic device.

For the foregoing problem, embodiments of this application provide an optical lens, and a lens structure is optimized, so that when normal optical image stabilization is implemented, the size of the optical lens in the Z-axis direction can be reduced, that is, the length of the optical lens can be reduced, to facilitate internal structure design of the electronic device. Because the size of the optical lens provided in embodiments of this application is small in the Z-axis direction, arrangement space of another component in the electronic device is expanded, an internal structure of the electronic device is effectively optimized, and difficulty in structure design and layout in the electronic device is reduced. This facilitates miniaturization and slimness design of the electronic device, and can improve user experience.

The following first describes the electronic device having the foregoing optical lens with reference to the accompanying drawings. The electronic device may be, for example, an electronic product that has a photographing or video recording function, such as a mobile phone, a tablet computer, a notebook computer, a television, a vehicle-mounted device, a wearable device, a video camera, a camera, or a video surveillance device. The mobile phone may be, for example, a conventional bar-type mobile phone, or may be a foldable mobile phone, for example, may be a vertical foldable mobile phone, a left-right inward-foldable mobile phone, or a left-right outward-foldable mobile phone. The wearable device may be, for example, a smart band, a smart watch, wireless earphones, augmented reality (augmented reality, AR) glasses, an AR helmet, virtual reality (virtual reality, VR) glasses, or a VR helmet. In embodiments of this application, descriptions are provided by using an example in which the electronic device is a mobile phone.

FIG. 5 is a diagram of a structure of an electronic device 1000 according to an embodiment of this application. A part (a) and a part (b) in FIG. 5 are respectively a front view and a rear view of the electronic device 1000. As shown in FIG. 5, the electronic device 1000 includes a camera module 100, a rear cover 200, a display 300, a side frame 400, and an image processor (not shown in the figure) located inside the device. The rear cover 200 and the display 300 are fastened to two sides of the side frame 400 opposite to each other, and the rear cover 200, the display 300, and the side frame 400 jointly enclose an internal cavity of the electronic device 1000. The display 300 may be configured to display an image, and may further integrate a touch function to implement human-computer interaction. The camera module 100 is accommodated in the internal cavity of the device, and the camera module 100 is configured to collect optical information outside the electronic device 1000, and generate a corresponding image signal. The image processor and the camera module 100 are in a communication connection, and the image processor is configured to obtain an image signal from the camera module 100 and process the image signal. The communication connection between the camera module 100 and the image processor may be for data transmission implemented through an electrical connection such as cabling, or data transmission implemented through coupling. It may be understood that the communication connection between the camera module 100 and the image processor may alternatively be implemented in another manner in which data transmission can be implemented.

In embodiments of this application, the rear cover 200 may be provided with a camera opening, the camera module 100 collects rays through the camera opening, and the camera module 100 may be used as a rear-facing camera of the electronic device 1000. For example, the rear cover 200 includes a transparent lens, and the transparent lens is mounted on the camera opening, to allow rays to pass through, and can be dustproof and waterproof. In some cases, the transparent lens may also be considered as a part of the camera module 100.

In another embodiment, the camera module 100 may also be used as a front-facing camera of the electronic device 1000. For example, the display 300 may be provided with a transparent region, and the camera module 100 may collect optical information outside the electronic device 1000 through the transparent region. In other words, the camera module 100 may be used as a front-facing camera module of the electronic device 1000, or may be used as a rear-facing camera module of the electronic device 1000. This is not strictly limited in embodiments of this application.

As shown in the part (b) in FIG. 5, the camera module 100 may be installed in a middle part in an upper part of the electronic device 1000. In another implementation, the camera module 100 may also be disposed at a left end or a right end of the upper part. An installation position of the camera module 100 is not strictly limited in this application.

Optionally, the electronic device 1000 may further include an analog-to-digital converter (which may also be referred to as an A/D converter, and is not shown in the figure). The analog-to-digital converter is connected between the camera module 100 and the image processor 20. The analog-to-digital converter is configured to convert an analog image signal generated by the camera module 10 into a digital image signal and transmit the digital image signal to the image processor 20. Then, the image processor 20 processes the digital image signal, to obtain a processed image signal. The processed image signal may be displayed as an image or a video on the display.

Optionally, the electronic device 1000 may further include a memory (not shown in the figure). The memory and the image processor are in a communication connection, and the image processor transmits a processed image signal to the memory, so that when an image needs to be viewed subsequently, the processed image signal can be found in the memory at any time and displayed on the display. In some embodiments, the image processor further compresses a processed digital image signal, and then stores a compressed digital image signal in the memory, to save space in the memory.

Optionally, the camera module 100 may include one, two, three, four, or more lenses. For example, the camera module 100 may include two lenses, one is a primary camera lens, and the other is a long-focus lens. For another example, the camera module 100 may alternatively include three lenses, the 1st lens is a primary lens, the 2nd lens is a long-focus lens, and the last lens is a secondary lens, an ultra-wide-angle lens, a macro lens, a depth-sensing lens, or the like. For another example, the camera module 100 may further include four lenses: one lens is a primary lens, the 2nd lens is a long-focus lens, the 3rd lens is an ultra-wide-angle lens, and the last lens is a macro lens.

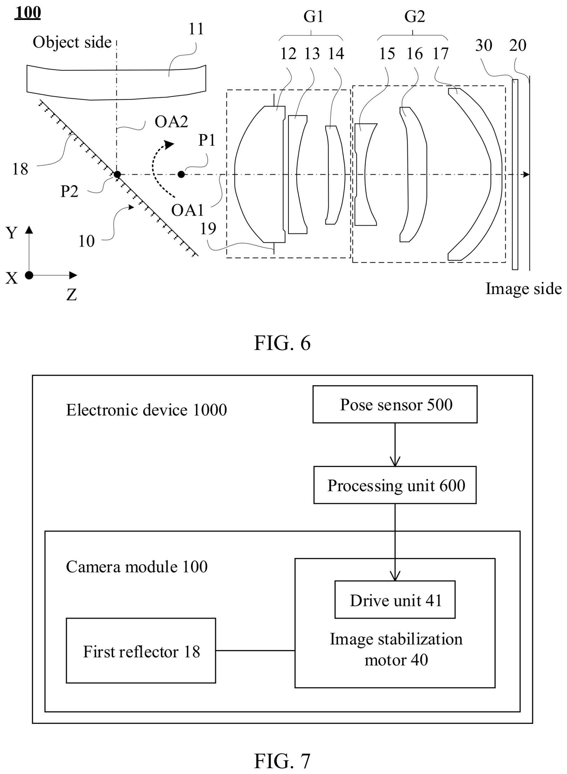

FIG. 6 is a diagram of a structure of a camera module 100 according to Embodiment 1 of this application. As shown in FIG. 6, the camera module 100 in this embodiment of this application includes an optical lens 10 and an image sensor 20.

The image sensor 20 is located on an image side of the optical lens 10. The camera module 100 may further include a circuit board (not shown in the figure), and the image sensor 20 may be disposed on the circuit board. A ray can pass through the optical lens 10 to reach the image sensor 20. For example, an operating principle of the camera module 100 is as follows: Rays reflected from a photographed scene pass through the optical lens 10 to generate an optical image, and the optical image is projected onto the image sensor 20. The image sensor 20 converts the optical image into an electrical signal, that is, an analog image signal, and transmits the electrical signal to the analog-to-digital converter; and the analog-to-digital converter converts the electrical signal into a digital image signal, and sends the digital image signal to an image processor.

The image sensor 20 (also referred to as a photosensitive element) is a semiconductor chip, and includes hundreds of thousands to millions of photodiodes on a surface, and electric charges are generated when the photodiodes are irradiated by rays. The image sensor 20 may be a charge coupled device (charge coupled device, CCD), or may be a complementary metal-oxide semiconductor (complementary metal-oxide semiconductor, CMOS). The charge coupled device is made of a highly photosensitive semiconductor material, and can convert rays into electric charges. The charge coupled device includes many photosensitive units, usually in megapixels. When the surface of the charge-coupled device is illuminated by rays, each photosensitive unit reflects electric charges on a component. Signals generated by all photosensitive units are combined to form a complete picture. The complementary metal-oxide semiconductor is mainly made by using two elements: silicon and germanium, so that semiconductors of N and P poles coexist on the complementary metal-oxide semiconductor. A current generated by these two complementary effects can be recorded and interpreted into an image by a processing chip.

In some embodiments, the image sensor 20 can move to perform shake compensation, to implement optical image stabilization. For example, the image sensor 20 may perform translation on a plane perpendicular to a Z axis or rotate relative to the Z axis, to implement X/Y/roll-axis image stabilization in FIG. 2. In this case, the image sensor 20 does not have a motion capability on the Z axis, or has a weak stroke that is far less than a focusing stroke, to reduce a thickness of the module. In some other embodiments, the image sensor 20 may also be a fixed component and cannot perform shake compensation.

The optical lens 10 performs imaging mainly by using a refraction principle of a lens element. That is, rays from a scene pass through the optical lens 10, to form a clear image on an imaging surface, and the image sensor 20 located on the imaging surface records the image of the scene. For example, the optical lens 10 may be a long-focus lens, for example, a periscope-type long-focus lens. When the optical lens 10 focuses on an object whose object distance is greater than 100 meters, that is, focuses on a distant scene or a scene at infinity, a field of view FOV of the optical lens 10 is less than 60°. For example, the field of view FOV may be 30°, 35°, 45°, 50°, 54°, or 58°, but is not limited thereto. In addition, an image height ImgH of the optical lens 10 is greater than 2 millimeters. That is, a diagonal length of an image sensor (for example, the image sensor 20) of the optical lens 10 is greater than 4 millimeters. For example, the diagonal length of the image sensor of the optical lens 10 may be 5 millimeters, 6 millimeters, or 8 millimeters. In this application, the optical lens 10 has a small field of view and a large sensor panel size, to obtain a strong distant shooting capability and good imaging quality in distant shooting.

As shown in FIG. 6, the camera module 100 in this embodiment of this application further includes a filter 30. The filter 30 may be located between the optical lens 10 and the image sensor 20, and is configured to filter out an unnecessary band in rays, to prevent the image sensor 20 from generating false colors or ripples, so as to improve effective resolution and color reproduction of the image sensor 20. For example, the filter 30 may be an infrared filter, for example, an infrared radiation-cut filter (infrared radiation-cut filter, IRCF). The filter 30 in this embodiment is an independent component located between the optical lens 10 and the image sensor 20. In another embodiment, the filter 30 may be disposed at any position before the image sensor 20, or a mechanical part of the filter 30 may be removed, and instead, light filtering is implemented by performing surface processing or material processing on at least one optical element in the optical lens 10. A specific embodiment of a mechanical part or structure configured to implement light filtering is not strictly limited in this application.

Optionally, the infrared filter may be implemented by vaporizing an infrared radiation (infrared radiation, IR) material coating on a blue crystal substrate.

Optionally, the infrared filter may be a white glass filter, a blue glass filter, or the like.

The following describes structural details of the optical lens 10 with reference to the accompanying drawings. As shown in FIG. 6, in this embodiment, the optical lens 10 includes a front lens element group, a first reflector 18, and a rear lens element group that are sequentially arranged in a direction from an object side to an image side. The first reflector 18 is configured to reflect a ray from the front lens element group to the rear lens element group. The front lens element group is a fixed lens element group, and the first reflector 18 is rotatably disposed in the lens to implement optical image stabilization.

In the optical lens 10 provided in this embodiment of this application, the front lens element group is disposed on an object side of the first reflector 18, and the front lens element group includes at least one lens element. In other words, some lens elements of the optical lens 10 may be disposed on the object side of the first reflector 18, but not all lens elements are disposed on an image side of the first reflector 18. In this way, because fewer lens elements are disposed on the image side of the optical lens 10, a size of the optical lens 10 in a Z-axis direction can be reduced. That is, a length of the optical lens 10 can be reduced. In this way, arrangement space of another component in the electronic device 1000 is expanded, an internal structure of the electronic device is effectively optimized, and difficulty in structure design and layout in the electronic device is reduced. This facilitates miniaturization and slimness design of the electronic device, and can improve user experience.

The first reflector 18 is configured to reflect a ray from the front lens element group to the rear lens element group, so that the optical lens 10 can implement a periscope-type structural layout. The first reflector 18 is rotatably disposed in the lens, and can rotate under driving of an image stabilization motor, to implement optical image stabilization and improve shooting quality of the optical lens 10. Because the front lens element group is a fixed lens element group, when performing optical image stabilization, the image stabilization motor needs to drive only the first reflector 18, and does not need to drive the front lens element group or the rear lens element group. Therefore, moving components for optical image stabilization are simplified, so that a workload of the image stabilization motor is small, a design requirement for the motor is reduced, and design of the image stabilization motor and a camera module becomes easier. However, because a lens element does not participate in shake compensation, a quantity of movable lens elements can be reduced, so that more lens elements can be fixedly disposed on an optical path, and relative positions of more lens elements become fixed. In this way, impact of a tolerance on an imaging point can be reduced, and imaging stability can be improved, so that the optical lens 10 provided in this embodiment of this application has good imaging quality and high imaging definition.

According to the optical lens 10 provided in this embodiment of this application, design of a lens structure is optimized, so that when normal optical image stabilization is implemented, the size of the optical lens 10 in the Z-axis direction can be reduced, that is, the length of the optical lens can be reduced, to facilitate internal structure design of the electronic device. The optical lens 10 can further make it easy to design the image stabilization motor and the camera module, and has good imaging quality.

FIG. 7 is a control principle diagram of optical image stabilization performed by the electronic device 1000 according to an embodiment of this application. As shown in FIG. 7, the electronic device 1000 further includes a pose sensor 500 and a processing unit 600. The pose sensor 500 is configured to: collect shake information of the electronic device 1000, and send the shake information to the processing unit 600. The processing unit 600 is configured to control the image stabilization motor 40 of the camera module 100 based on the shake information, so that the image stabilization motor 40 can drive the first reflector 18 to rotate, to implement optical image stabilization.

Further, the processing unit 600 may control the image stabilization motor 40 by using a drive unit 41 of the image stabilization motor 40. The processing unit 600 may be, for example, an image stabilization chip, or any processor or controller configured to perform image stabilization calculation. The drive unit 41 is, for example, a drive circuit or a drive chip. In this case, the processing unit 600 may calculate shake compensation information (for example, a displacement amount of a reverse motion) of the first reflector 18 based on the shake information, and send the shake compensation information to the drive unit 41. The drive unit 41 controls the image stabilization motor 40 based on the shake compensation information, for example, controls a magnitude and/or a direction of a drive current of the image stabilization motor 40, so that the image stabilization motor 40 drives the first reflector 18 to perform shake compensation.

Optionally, the pose sensor 500 includes but is not limited to a gyroscope, an accelerometer, an inertia sensor, a Hall (Hall) sensor, a magnetic encoder, or the like. For example, the pose sensor 500 may be a micro electro mechanical system (micro electro mechanical system, MEMS) gyroscope.

Optionally, the image stabilization motor 40 may be any one of a voice coil motor, a piezoelectric motor (piezomotor), a shape memory alloy (shape memory alloys, SMA) motor, a MEMS motor, a wire-suspended motor, a ball motor, or the like.

For example, the image stabilization motor 40 may be a voice coil motor. In this case, the image stabilization motor 40 may include three parts: a fixed part, a movable part, and an actuating part. The fixed part has accommodation space, for accommodating the movable part. The movable part is movably disposed on the fixed part, and is configured to fasten the first reflector 18. The actuating part is configured to drive the movable part to rotate, that is, drive the first reflector 18 to rotate, to perform shake compensation.

The actuating part usually includes a combination of a coil and a magnet. The coil and the magnet may be fastened to the fixed part and the movable part respectively, and may be arranged facing each other in parallel. A driving force can be provided for the magnet by supplying a direct current to the coil. A magnitude and a direction of a force of the magnet covered by a magnetic field can be controlled by changing a magnitude and a direction of the direct current of the coil. The magnet may provide the driving force for the movable part, to drive the movable part to rotate, and the movable part further drives the first reflector 18 to rotate, to implement a shake compensation function.

Optionally, to implement closed-loop control, the image stabilization motor 40 may further include a position detection sensor. The position detection sensor is configured to detect real-time position information of the movable part, and send the real-time position information to the drive unit 41. The drive unit 41 controls the coil based on the real-time position information, for example, increases or decreases a magnitude of the current of the coil, and changes a direction of the current.

Optionally, the position detection sensor may be a Hall sensor or a magnetic resistance (magnetic resistance, MR) sensor.

As shown in FIG. 6, the first reflector 18 is configured to rotate about a rotation point P1. In other words, under driving of the image stabilization motor 40, the first reflector 18 can rotate by using the rotation point P1 as a center point. The rotation point P1 may be located inside the first reflector 18, or may be located outside the first reflector 18. The rotation point P1 may be located on an optical axis, or may be located close to the optical axis. For example, a projection distance of the rotation point P1 on the optical axis is 0 to 3 millimeters, for example, 0.5 millimeters, 1.2 millimeters, 1.8 millimeters, or 2.5 millimeters.

As shown in FIG. 6, in this embodiment, the first reflector 18 is a mirror (mirror). By using a center point P2 of a reflecting surface of the first reflector 18 as a boundary, the optical axis may be divided into an incident optical axis OA2 and an emergent optical axis OA1. That is, an optical axis on an object side of the center point P2 of the reflecting surface of the first reflector 18 is the incident optical axis OA2, and an optical axis on an image side of the center point P2 of the reflecting surface of the first reflector 18 is the emergent optical axis OA1. The rotation point P1 may be located on the incident optical axis OA2 or the emergent optical axis OA1, or may be close to the incident optical axis OA2 or the emergent optical axis OA1. For example, a projection distance of the rotation point P1 on the incident optical axis OA2 or the emergent optical axis OA1 is 0 to 3 millimeters, for example, 0.6 millimeters, 1.5 millimeters, 2.0 millimeters, or 2.4 millimeters. In some cases, the rotation point P1 may alternatively overlap the center point P2.

As shown in FIG. 6, in this embodiment, the rotation point P1 is located on the emergent optical axis OA1. That is, the rotation point P1 is located on the image side of the center point P2.

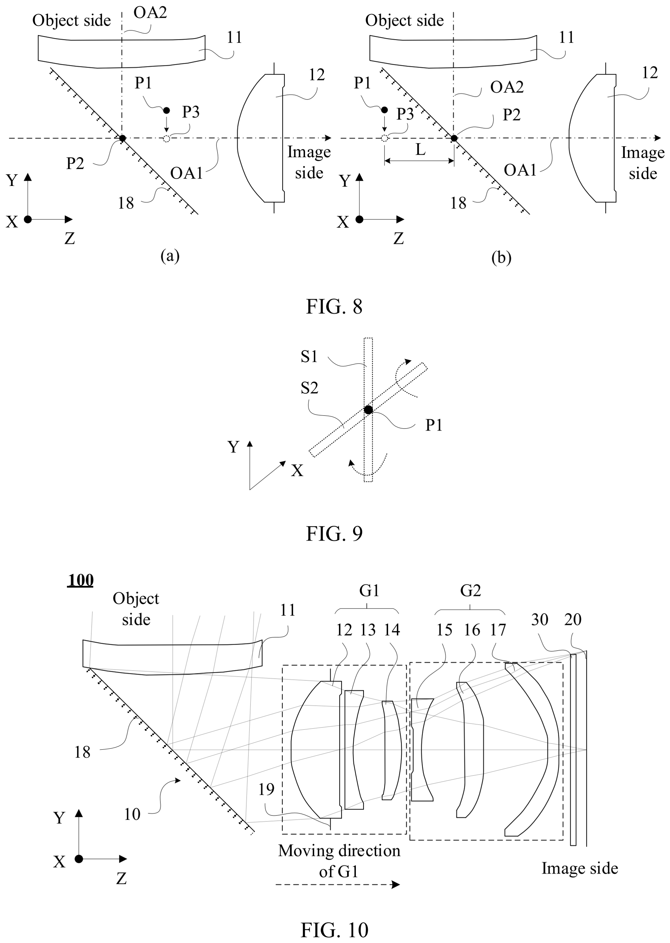

FIG. 8 is a diagram of two different arrangement positions of the rotation point P1 of the first reflector 18. As shown in a part (a) in FIG. 8, a projection point P3 of the rotation point P1 on a straight line on which the emergent optical axis OA1 lies is located on the emergent optical axis OA1, the straight line on which the emergent optical axis OA1 lies is a straight line parallel to the Z axis. That the projection point (for example, an orthographic projection point) of the rotation point P1 is located on the emergent optical axis OA1 indicates that the rotation point P1 is located on the image side of the center point P2. In a possible implementation, as shown in FIG. 6, the rotation point P1 is located on the emergent optical axis OA1. In this case, a projection point of the rotation point P1 on the straight line on which the emergent optical axis OA1 lies is the rotation point P1. That is, in this case, the rotation point P1 and the projection point P3 are a same point, and the projection point P3 is the rotation point P1.

As shown in a part (b) in FIG. 8, a projection point P3 of the rotation point P1 on a straight line on which the emergent optical axis OA1 lies is located on a reverse extension line of the emergent optical axis OA1, and the straight line on which the emergent optical axis OA1 lies is a straight line parallel to the Z axis. That the projection point (for example, an orthographic projection point) of the rotation point P1 is located on the reverse extension line of the emergent optical axis OA1 indicates that the rotation point P1 is located on a back side of the center point P2. The back side and the image side of the center point P2 are two sides of the center point P2 opposite to or away from each other. For example, the back side is the left side of the center point P2 in FIG. 8, and the image side is the right side of the center point P2 in FIG. 8. In a possible implementation, the rotation point P1 is located on the reverse extension line of the emergent optical axis OA1. In this case, a projection point of the rotation point P1 on the straight line on which the emergent optical axis OA1 lies is the rotation point P1. That is, in this case, the rotation point P1 and the projection point P3 are a same point, and the projection point P3 is the rotation point P1. Further, on this basis, an effective focal length EFL of the optical lens 10 and a distance L between the projection point P3 and the center point P2 satisfy: $L/EFL \leq 2.0$.

In this embodiment of this application, a position of the rotation point P1 is properly selected, so that integrity of an optical path can be ensured. Therefore, when the first reflector 18 rotates at different positions, it can be ensured that a ray is reliably reflected to the rear lens element group, a ray loss caused by image stabilization is reduced or avoided, and small positional differences of rays to arrive at lens elements can be ensured. In this application, the foregoing setting can ensure that an amount of rays reflected by the first reflector 18 to the rear lens element group does not vary significantly in different image stabilization states (that is, at different positions), that is, can ensure that imaging definition does not vary significantly in different image stabilization states, and ensure that the optical lens 10 always has good imaging quality.

FIG. 9 is a diagram of a manner of forming the rotation point P1 of the first reflector 18. As shown in FIG. 9, the first reflector 18 may be configured to rotate about a plurality of rotation axes (for example, two, three, or four), and an intersection point of the plurality of rotation axes forms the rotation point P1 in this embodiment of this application. For example, under driving of the image stabilization motor 40, the first reflector 18 can rotate about a first rotating shaft S1 in FIG. 9, and can also rotate about a second rotating shaft S2 in FIG. 9. An intersection point of the first rotating shaft S1 and the second rotating shaft S2 is the rotation point P1.

Further, in this embodiment, the first rotating shaft S1 may be a yaw axis parallel to a Y axis, and the first reflector 18 is configured to perform image stabilization on the yaw axis. That is, under driving of the image stabilization motor 40, the first reflector 18 performs a yaw motion about the first rotating shaft S1. The second rotating shaft S2 may be a pitch axis parallel to an X axis, and the first reflector 18 is configured to perform image stabilization on the pitch axis. That is, under driving of the image stabilization motor 40, the first reflector 18 performs a pitch-down motion or a pitch-up motion about the second rotating shaft S2. In this case, the rotation point P1 is the intersection point of the pitch axis and the yaw axis.

The following continues to describe structural details of the optical lens 10 provided in this embodiment of this application with reference to the accompanying drawings.

As shown in FIG. 6, the front lens element group is located on the object side of the first reflector 18, and is configured to receive external rays. The front lens element group includes at least one lens element, for example, includes a first lens element 11. In addition, according to a specific imaging requirement, the front lens element group may further include two, three, or more lens elements.

As shown in FIG. 6, the first reflector 18 is located between the front lens element group and the rear lens element group, and is configured to reflect (deflect) a ray from the front lens element group to the rear lens element group. Because the first reflector 18 can change a propagation direction of a ray, an optical axis direction of the optical lens 10 may be different from a direction in which an external ray enters the electronic device 1000, so that the optical lens 10 can implement a periscope-type structural layout, and an arrangement position and angle of the optical lens 10 are more flexible.

In this embodiment, the first reflector 18 is a mirror. In another embodiment, the first reflector 18 may alternatively be a prism (prism), for example, a right-angle prism.

Optionally, the reflecting surface of the first reflector 18 may be a metal reflective coating prepared by using a vapor deposition method or a sputtering method, and the metal may be nickel, aluminum, silver, gold, or the like, or an alloy thereof.

Optionally, high-reflectivity coating design may be used, and a high-reflectivity coating is disposed on the reflecting surface, to improve imaging quality.

Optionally, in consideration of a cutoff capability of an optical system for near-infrared light and ultraviolet light, the coating of the reflecting surface may be designed to have a high-reflectivity characteristic of visible light (380 nm to 780 nm) and a high-transmission characteristic of an ultraviolet range (below 380 nm) and a near-infrared range (above 780 nm), so that less invisible light can enter the image sensor 20, to improve imaging quality.

Optionally, a reflectivity of the reflecting surface may be required to be greater than 95% within a visible light bandwidth range, and no reflectivity constraint is imposed for ultraviolet and near-infrared ranges.

Optionally, the reflecting surface of the first reflector 18 may be a plane, and has good manufacturability. In addition, the reflecting surface of the first reflector 18 may alternatively be a spherical surface (concessive or convex), a cylindrical surface (curved in one direction and linearly extended in the other direction), or a free curved surface. In this case, when implementing reflection of rays, the reflecting surface of the first reflector 18 may further correct astigmatism and an aberration, to further improve imaging quality or reduce a volume.

The rear lens element group is located on the image side of the first reflector 18, and is configured to converge rays reflected by the first reflector 18 and perform imaging on the image sensor 20. The rear lens element group includes a plurality of lens elements, to improve a specification of the optical lens and improve imaging quality. For example, the rear lens element group may include two to eight lens elements, for example, two, four, five, or six lens elements.

In this embodiment, a focal length of the rear lens element group is positive. The rear lens element group has a large quantity of lens elements, and the focal length of the rear lens element group is set to a positive value, so that the rear lens element group plays a core imaging function.

Optionally, a focal length of the front lens element group may be positive or negative.

Optionally, the focal length F1 of the front lens element group and an overall focal length Fs of the optical lens 10 satisfy: |F1/Fs|>1.2. That is, an absolute value of a ratio of F1 to Fs is greater than 1.2. The foregoing setting can ensure that an amount of rays reflected by the first reflector 18 to the rear lens element group does not vary significantly in different image stabilization states (that is, at different positions), that is, can ensure that imaging definition does not vary significantly in different image stabilization states, and ensure that the optical lens 10 always has good imaging quality.

As shown in FIG. 6, in this embodiment, the rear lens element group includes a second lens element 12, a third lens element 13, a fourth lens element 14, a fifth lens element 15, a sixth lens element 16, and a seventh lens element 17 that are sequentially arranged in a direction from the object side to the image side.

Optionally, the optical lens 10 may include three to ten lens elements, for example, four, seven, or eight lens elements. According to an actual optical design requirement, at least one of the plurality of lens elements may be disposed on the object side of the first reflector 18, to form the front lens element group, and remaining lens elements are disposed on the image side of the first reflector 18, to form the rear lens element group.

Optionally, the plurality of lens elements of the optical lens 10 may use a same material, for example, glass or resin. The glass has a high refractive index and a low expansion property, so that the optical lens 10 has better imaging quality and a low thermal drift property. The resin has a low density, so that a weight of a lens element group can be reduced, to facilitate movement, and improve a focusing capability of the optical lens 10. In some other embodiments, at least one of the plurality of lens elements of the optical lens 10 is made of a material different from that of another lens element. This is not limited in this application.

Optionally, the plurality of lens elements of the optical lens 10 may be manufactured by using a process such as injection molding, compression molding, and/or polishing and grinding.

Optionally, an optical surface of at least one lens element of the optical lens 10 is an aspheric surface, and an optical surface of an aspheric shape has different focal powers from a paraxial region to an outer field region, so that an imaging picture has more balanced image quality; and/or the optical surface of the at least one lens element of the optical lens 10 may be a freeform surface, to correct an aberration. The aspheric surface is a surface that is rotationally symmetric around an optical axis. The freeform surface may have no symmetry axis, or may be symmetric in one direction, or may be symmetric in two directions.

Optionally, the plurality of lens elements of the optical lens 10 are assembled by using an active calibration (active alignment, AA) process, to ensure assembly precision.

Optionally, an optical surface of at least one lens element of the optical lens 10 may form a diffraction grating structure. By properly disposing the diffraction grating structure, a chromatic aberration can be reduced, and a volume of the optical lens 10 can also be reduced.

Optionally, the optical lens 10 may further include a liquid lens element (not shown in the figure), to enhance focus adjustment effect and implement ultra close-up shooting. The liquid lens element is a mechanical part that uses liquid as a lens element and changes a focal length by changing a curvature of the liquid.

Optionally, the at least one lens element of the optical lens 10 may use a special-shape technology, to reduce a size of the optical lens 10, so that the optical lens 10 can be better applicable to a miniaturized electronic device 1000, and an application scope of the optical lens 10 is increased. A notch may be implemented by using an I-CUT process. In addition, because a height of a lens element is decreased in a notch manner, a large clear aperture may be set for the lens element, so that an amount of light admitted through the optical lens 10 is increased, and imaging quality of the optical lens 10 is better. Alternatively, the special-shape technology may be used on a structural support such as a lens barrel or a partition of a lens element, to reduce the size of the optical lens 10.

Optionally, blackening or roughening may be performed on a peripheral side surface or a supporting surface of at least one lens element of the optical lens 10, to eliminate stray light and improve imaging quality. The blackening may be to coat or plate black ink or another extinction material, or may be to bond a film. The roughening is mainly used to increase roughness.

As shown in FIG. 6, the rear lens element group includes a first lens element group G1 and a second lens element group G2 that are sequentially arranged from the object side to the image side. The first lens element group G1 includes at least one lens element, for example, may include two, three, four, or more lens elements. The second lens element group G2 includes at least one lens element, for example, may include two, three, four, or more lens elements. In this embodiment, the first lens element group G1 includes the second lens element 12, the third lens element 13, and the fourth lens element 14, and the second lens element group G2 includes the fifth lens element 15, the sixth lens element 16, and the seventh lens element 17.

Optionally, a focal length of the first lens element group G1 is positive, and a focal length of the second lens element group G2 is negative. According to the foregoing setting, the optical lens 10 can obtain better macro shooting performance.

Optionally, the first lens element group G1 includes at least two lens elements (that is, two lens elements), an Abbe number of at least one lens is less than 45, and the second lens element group G2 includes at least one lens element. According to the foregoing setting, the optical lens 10 can obtain better macro shooting performance, and can balance various aberrations, to help improve imaging quality.

As shown in FIG. 6, in a focusing process of the optical lens 10 from a distant scene to a close-up scene, a distance between the first lens element group G1 and the second lens element group G2 is increased. On the contrary, in a focusing process of the optical lens 10 from a close-up scene to a distant scene, the distance between the first lens element group G1 and the second lens element group G2 is decreased. Therefore, in the focusing process of the optical lens 10 between a distant scene and a close-up scene, the distance between the first lens element group G1 and the second lens element group G2 is changed.

In this application, the distance between the first lens element group G1 and the second lens element group G2 is changed, so that the optical lens 10 can not only implement long-distance shooting and good imaging quality, but also have a strong close-up shooting capability, to implement wide-object-distance imaging from a distant scene to a close-up scene.

In this embodiment of this application, the first lens element group G1 is a focusing lens element group, the second lens element group G2 is a lens element group at a fixed position, and the first lens element group G1 can move on the optical axis (for example, the emergent optical axis OA1), to implement the foregoing focusing process. A single-group focusing manner is used in this embodiment, and a motion manner of a focusing structure of the optical lens 10 can be simplified, to simplify a focusing method.

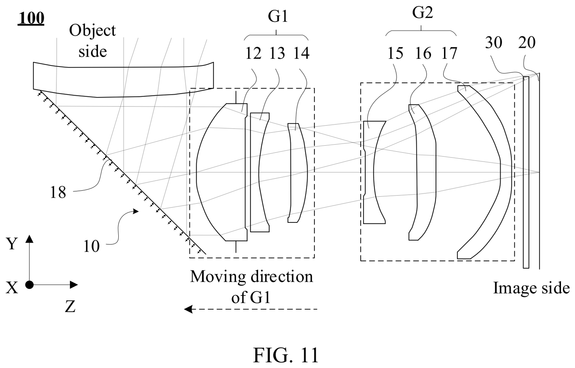

FIG. 10 is a diagram of an optical path when the camera module 100 focuses on a distant scene according to Embodiment 1 of this application. FIG. 11 is a diagram of an optical path when the camera module focuses on a close-up scene according to Embodiment 1 of this application.

As shown in FIG. 10, when the optical lens 10 focuses on the distant scene (at infinity), the first lens element group G1 moves toward the image side along the optical axis, a ray reflected by an object in the distant scene is imaged on the imaging surface of the image sensor 20 after passing through the optical lens 10, and the camera module 100 can capture an image of the distant scene. As shown in FIG. 11, when the optical lens 10 focuses on the close-up scene, the first lens element group G1 moves toward the object side along the optical axis, a ray reflected by an object in the close-up scene is imaged on the imaging surface of the image sensor 20 after passing through the optical lens 10, and the camera module 10 can capture an image of the close-up scene.

As shown in FIG. 10 and FIG. 11, in the focusing process of the optical lens 10 from the distant scene to the close-up scene, the first lens element group G1 moves toward the object side along the optical axis, the second lens element group G2 does not move, the distance between the first lens element group G1 and the second lens element group G2 is increased, and the effective focal length EFL of the optical lens 10 is decreased. In addition, a distance between the first lens element group G1 and the image sensor 20 is increased, and a distance between the second lens element group G2 and the image sensor 20 is unchanged.

In this embodiment, focusing is performed in a manner of moving the first lens element group G1 and fastening the second lens element group G2, so that during focusing on the close-up scene, an object-side surface of the optical lens 10 is close to a photographed object, a ray deviation is small, an aberration is reduced, and imaging quality is improved.

Optionally, a focus motor may be used to drive the first lens element group G1 to move on the optical axis, to implement the foregoing focusing process. The focus motor may be, for example, a voice coil motor, a piezoelectric motor, a shape memory alloy motor, or a stepper motor.

As shown in FIG. 6, FIG. 10, and FIG. 11, the optical lens 10 may further include an aperture stop 19, and the aperture stop 19 may be mounted on the first lens element group G1. In this case, aperture adjustment effect of the aperture stop 19 is better, and imaging quality of the optical lens 10 can be improved. For example, the aperture stop 19 may be mounted at one end that is of the first lens element group G1 and that is close to the object side. In addition, the aperture stop 19 may alternatively be mounted on another lens element in the first lens element group G1, the second lens element group G2, the front lens element group, or another position of the optical lens 10. This is not strictly limited in this embodiment of this application.

The aperture stop 19 may be of an isolated ring structure or a variable blade structure; or the aperture stop 19 may be implemented by using a surface spraying process, for example, the aperture stop 19 is formed by spraying a light shielding material on a lens element. A position of the aperture stop 19 may be fixed or may be variable. For example, the position of the aperture stop 19 is variable, and the position of the aperture stop 19 may be adjusted based on a focusing case, to be located between different lens elements.

Based on data and a simulation result, the following presents a specific solution of the optical lens 10 shown in FIG. 6 in a possible embodiment.

Refer to both Table 1a and Table 1b. Table 1a shows curvature radiuses, thicknesses, refractive indexes (Nd), and Abbe numbers of the lens elements, the first reflector 18, the aperture stop 19, and the filter 30 when the optical lens 10 shown in FIG. 6 focuses on a distant scene in a possible embodiment. The thickness includes a thickness of a lens element, and also includes a distance between lens elements. Table 1b shows aspheric coefficients of the lens elements of the optical lens 10 shown in FIG. 6 in a possible embodiment.

Table 1a

| Surface number | Description | Surface type | Curvature radius | Thickness (mm) | Refractive index | Abbe number |
|---|---|---|---|---|---|---|
| OBJ | Object surface | Plane | Infinity | Infinity | | |
| S1 | First lens element 11 | Aspheric | 174527.5732 | 1.57 | 1.545 | 56 |
| S2 | | Aspheric | -42.88037541 | 0.28 | | |
| S3 | | Plane | Infinity | 3.7 | | |
| S4 | Reflecting surface | Plane | Infinity | -3.7 | | |
| S5 | | Plane | Infinity | 1.82534458 | | |
| S6 | Projection plane of an image stabilization rotation point | Plane | Infinity | -1.82534458 | | |
| S7 | | Plane | Infinity | -4.56870981 | | |
| STO | Aperture stop 19 | Plane | Infinity | 2.054114859 | | |
| S8 | Second lens element 12 | Aspheric | -5.188093959 | -2.56596136 | 1.545 | 56 |
| S9 | | Aspheric | 52.87773499 | -0.13793331 | | |
| S10 | Third lens element 13 | Aspheric | -29.89738763 | -0.57152985 | 1.67 | 19.4 |
| S11 | | Aspheric | -6.305746471 | -1.63204126 | | |
| S12 | Fourth lens element 14 | Aspheric | -41.11882387 | -0.83770636 | 1.567 | 37.7 |
| S13 | | Aspheric | 11.29810673 | -0.69 | | |
| S14 | Fifth lens element 15 | Aspheric | 8.512495445 | -0.5 | 1.545 | 56 |
| S15 | | Aspheric | -14.35418068 | -2.16384657 | | |
| S16 | Sixth lens element 16 | Aspheric | -28.10460834 | -1.0221243 | 1.67 | 19.4 |
| S17 | | Aspheric | 39.55306847 | -3.3378212 | | |
| S18 | Seventh lens element 17 | Aspheric | 4.722436316 | -0.65 | 1.545 | 56 |
| S19 | | Aspheric | 9.077930271 | -0.6 | | |
| S20 | Filter 30 | Plane | Infinity | -0.21 | 1.523 | 54.5 |
| S21 | | Plane | Infinity | -0.54747779 | | |
| S22 | Image sensor 20 | Plane | Infinity | 0 | | |

Table 1b

| Surface number | A4 | A6 | A8 | A10 | A12 | A14 | A16 | A18 |
|---|---|---|---|---|---|---|---|---|
| S1 | -3.39E-04 | -2.67E-06 | -1.55E-07 | 1.04E-08 | -3.91E-10 | 5.38E-12 | | |
| S2 | -3.49E-04 | -4.64E-06 | 1.15E-07 | -4.44E-09 | 5.87E-11 | | | |
| S8 | -5.48E-04 | 2.15E-05 | -5.83E-06 | 3.24E-07 | -5.05E-09 | -3.26E-10 | | |
| S9 | -4.23E-03 | 1.30E-03 | -2.87E-04 | 3.17E-05 | -1.74E-06 | 3.79E-08 | | |
| S10 | 5.07E-03 | 8.38E-05 | -1.97E-04 | 2.80E-05 | -1.67E-06 | 3.81E-08 | | |

(continued)

| Surface number | A4 | A6 | A8 | A10 | A12 | A14 | A16 | A18 |
|---|---|---|---|---|---|---|---|---|
| S11 | 9.40E-03 | -1.36E-03 | 1.16E-04 | -1.30E-05 | 1.13E-06 | -4.33E-08 | | |
| S12 | 3.93E-03 | 2.28E-04 | 3.81E-05 | -1.63E-05 | 2.29E-06 | -9.31E-08 | | |
| S13 | 1.98E-03 | 4.40E-04 | -6.33E-05 | 5.63E-06 | 3.05E-08 | -1.18E-08 | | |
| S14 | -1.13E-02 | 7.97E-04 | 2.59E-05 | -1.15E-05 | 8.88E-07 | -2.16E-08 | | |
| S15 | -9.05E-03 | -1.63E-04 | 2.26E-04 | -3.68E-05 | 2.43E-06 | -5.43E-08 | | |
| S16 | 8.49E-03 | -8.98E-04 | 6.78E-05 | 7.65E-06 | -1.68E-06 | 1.13E-07 | -2.85E-09 | |
| S17 | 7.97E-03 | -9.02E-04 | 7.98E-05 | 2.27E-06 | -9.28E-07 | 6.52E-08 | -1.58E-09 | |
| S18 | 1.56E-02 | -4.66E-03 | 5.63E-04 | -2.52E-05 | -9.88E-07 | 1.53E-07 | -5.91E-09 | 7.79E-11 |
| S19 | 1.94E-02 | -4.77E-03 | 6.03E-04 | -4.05E-05 | 1.37E-06 | -1.47E-08 | -2.97E-10 | 6.49E-12 |

An aspheric surface of the long-focus lens 10 in Table 1a may be defined by using, but not limited to, the following aspheric curve equation:

$$z = \frac{cr^2}{1 + \sqrt{1 - (1+k)c^2 r^2}} + \sum_{i=1}^{N} \alpha_i r^{2i}$$

z is a relative distance between a point on the aspheric surface at a radial distance r from an optical axis and a tangent plane of an intersection point tangent to the optical axis on the aspheric surface; r is a vertical distance between a point on the aspheric curve and the optical axis; c is a curvature; k is a conic coefficient; and $\alpha_i$ is an $i^{th}$-order aspheric coefficient. For details, refer to Table 1b.

Table 1c

| Parameter | Fs | Fno | FOV | F1 | F1/Fs |
|---|---|---|---|---|---|
| Value | 18.7 | 2.0 | 26° | 82.0 | 4.385 |

Table 1c provides other parameter information of the optical lens 10. The other parameters include, for example, the overall focal length Fs of the optical lens 10, an aperture F-number Fno, a field of view FOV, the focal length F1 of the front lens element group (that is, the first lens element 11), and the ratio of F1 to Fs. F1/Fs is 4.385 (greater than the foregoing specified threshold 1.2), so that it can be ensured that an amount of rays reflected by the first reflector 18 to the rear lens element group does not vary significantly in different image stabilization states (that is, at different positions). That is, it can be ensured that imaging definition does not vary significantly in different image stabilization states, and it can be ensured that the optical lens 10 always has good imaging quality.

In this embodiment, when the optical lens 10 switches from a distant scene to a close-up scene, for example, focuses on a close-up scene at 60 millimeters, the first lens element group G1 moves toward the object side, and the distance between the first lens element group G1 and the second lens element group G2 is increased by 2.2 mm. That is, a focusing stroke of the first lens element group G1 toward the object side is 2.2 mm. Compared with a conventional lens (generally, a focusing stroke needs to be greater than 4 mm), the focusing stroke is obviously shortened, and a focusing capability is strong.

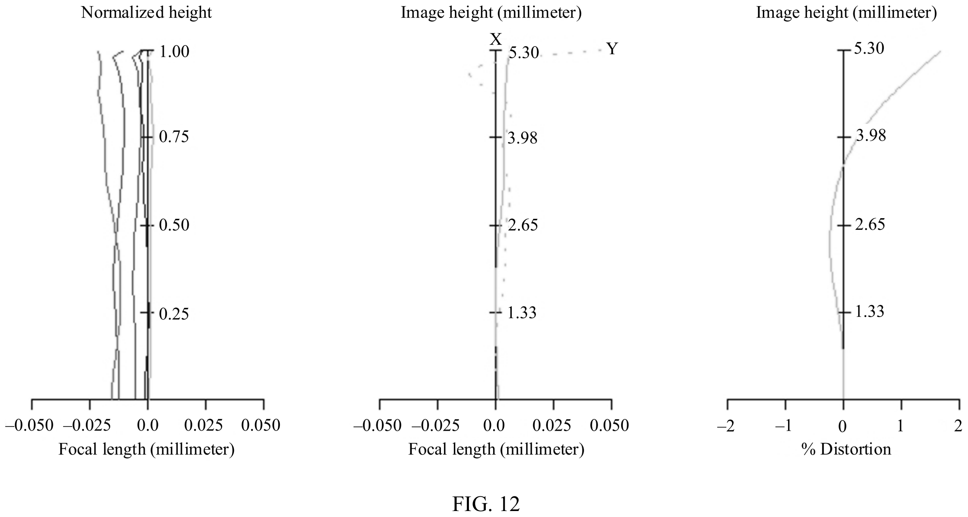

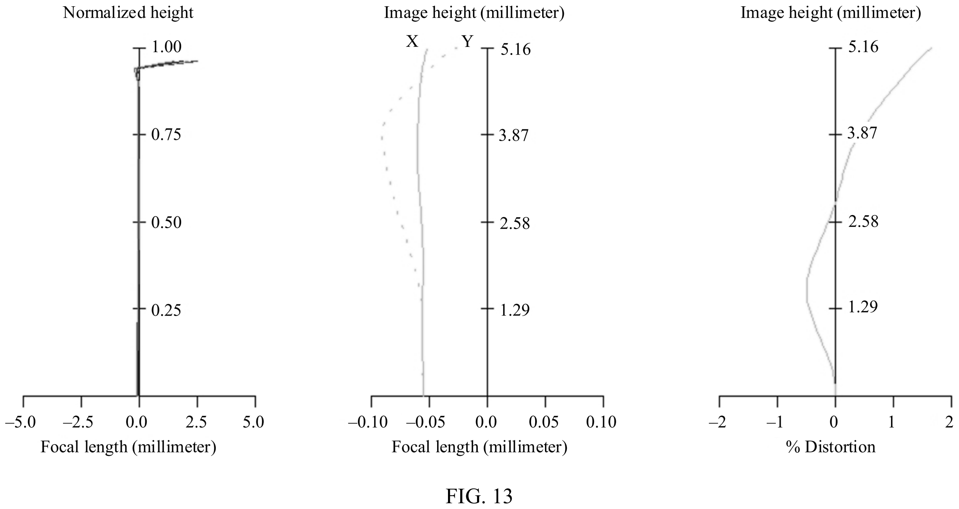

Refer to FIG. 12 and FIG. 13. FIG. 12 is a simulation effect diagram of the optical lens 10 during focusing on the distant scene shown in FIG. 10, and FIG. 13 is a simulation effect diagram of the optical lens 10 during focusing on the close-up scene at 60 millimeters shown in FIG. 11.

Both FIG. 12 and FIG. 13 include an axial chromatic aberration curve diagram, an astigmatic field curve diagram, and a distortion diagram of the optical lens 10. The axial chromatic aberration curve diagram includes spherical aberration curves corresponding to different bands of a system (650 nm, 610 nm, 555 nm, 510 nm, and 470 nm shown in the figure). A physical meaning of the curve is a deviation of light of a corresponding wavelength emitted at a 0-degree field of view from an ideal image point after passing through an optical system. A horizontal coordinate of the curve diagram is a deviation value along an optical axis direction, and a vertical coordinate of the curve diagram is a normalized coordinate (height) at a pupil. Values shown in FIG. 12 and FIG. 13 are all small. During focusing on a distant scene and a close-up scene, on-axis aberrations (a spherical aberration, a chromatic aberration, and the like) of the optical lens 10 are well corrected. The astigmatic field curve diagram is used to show deviations between convergence points of pencils in different fields of view and an ideal imaging plane. X is a beam in a sagittal direction, and Y is a beam in a meridian direction. A horizontal coordinate of the curve diagram is a deviation value along the optical axis, and a vertical coordinate of the curve diagram is a corresponding field of view. When a value of a field of view is excessively large, image quality in the field of view is poor or a high-order aberration exists. As shown in FIG. 12 and FIG. 13, curvatures of field in the two directions are small, and the system has a good depth of focus. The distortion diagram is used to represent relative deviations of convergence points of beams in different fields of view (actual image heights) from an ideal image height. Distortions shown in FIG. 12 and FIG. 13 are small, and it can be ensured that there is no obvious distortion in a picture.

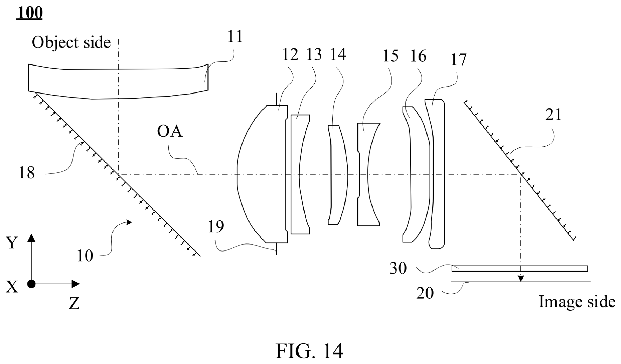

FIG. 14 is a diagram of a structure of the camera module 100 according to Embodiment 2 of this application. As shown in FIG. 14, in this embodiment, the rear lens element group of the optical lens 10 is configured to move along the emergent optical axis OA1 as a whole to implement auto focus. For example, the rear lens element group includes six lens elements: a second lens element 12, a third lens element 13, a fourth lens element 14, a fifth lens element 15, a sixth lens element 16, and a seventh lens element 17 that are sequentially arranged in a direction from an object side to an image side. Positions of the six lens elements are fixed. A focus motor may simultaneously drive the six lens elements to move toward the object side or toward the image side on the emergent optical axis OA1, to implement auto focus.

Further, in this embodiment, the optical lens 10 further includes a second reflector 21 located on the image side of the rear lens element group, and the second reflector 21 is configured to reflect or deflect a ray from the rear lens element group to the image sensor 20.

In this embodiment, two reflectors are disposed to deflect propagation angles of rays, so that an arrangement direction of the image sensor 20 can be flexibly adjusted, to better utilize space. In this case, the rays may be deflected 180°, and a plane on which the image sensor 20 is located can be parallel to the display 300 of the electronic device 1000. Therefore, disposing of the image sensor 20 is no longer limited to a thickness size of the electronic device 1000, and an image sensor of a larger size can be disposed, to help improve imaging quality.

Optionally, the second reflector 21 may be a mirror or a prism.

Based on data and a simulation result, the following presents a specific solution of the optical lens 10 shown in FIG. 14 in a possible embodiment.

Refer to both Table 2a and Table 2b. Table 2a shows curvature radiuses, thicknesses, refractive indexes (Nd), and Abbe numbers of the lens elements, the first reflector 18, the aperture stop 19, and the filter 30 when the optical lens 10 shown in FIG. 14 focuses on a distant scene in a possible embodiment. The thickness includes a thickness of a lens element, and also includes a distance between lens elements. A virtual surface is an imaginary surface, to facilitate optical design. Table 2b shows aspheric coefficients of the lens elements of the optical lens 10 shown in FIG. 14 in a possible embodiment.

Table 2a

| Surface number | Description | Surface type | Curvature radius | Thickness (mm) | Refractive index | Abbe number |
|---|---|---|---|---|---|---|
| OBJ | Object surface | Plane | Infinity | Infinity | | |
| S1 | First lens element 11 | Aspheric | 87565.39555 | 1.56955732 | 1.545 | 56 |
| S2 | | Aspheric | -23.71879807 | 0.28044268 | | |
| S3 | | Plane | | 3.7 | | |
| S4 | Reflecting surface | Plane | | -3.7 | | |
| S5 | | Plane | | 2.123577695 | | |
| S6 | Projection plane of an image stabilization rotation point | Plane | | -2.1235777 | | |
| S7 | | Plane | | -3.29826179 | | |
| STO | Aperture stop 19 | Plane | Infinity | 1.343622137 | | |
| S8 | Second lens element 12 | Aspheric | -4.91369401 | -1.98101783 | 1.545 | 56 |
| S9 | | Aspheric | 409.8591528 | -0.05 | | |
| S10 | Third lens element 13 | Aspheric | -78.13724394 | -0.5 | 1.67 | 19.4 |
| S11 | | Aspheric | -7.860474473 | -1.02088449 | | |

(continued)

| Surface number | Description | Surface type | Curvature radius | Thickness (mm) | Refractive index | Abbe number |
|---|---|---|---|---|---|---|
| S12 | Fourth lens element 14 | Aspheric | -29.82950158 | -0.90073277 | 1.567 | 37.7 |
| S13 | | Aspheric | 8.852484821 | -0.69 | | |
| S14 | Fifth lens element 15 | Aspheric | 3.954653384 | -0.5 | 1.545 | 56 |
| S15 | | Aspheric | 15.23953261 | -1.29003261 | | |
| S16 | Sixth lens element 16 | Aspheric | -562.3292057 | -0.68574362 | 1.67 | 19.4 |
| S17 | | Aspheric | 24.5594401 | -0.05107215 | | |
| S18 | Seventh lens element 17 | Aspheric | 21.45538429 | -0.65 | 1.545 | 56 |
| S19 | | Aspheric | -13.54250818 | -0.6 | | |
| S20 | Second reflector 21 | | | -6.4 | 1.74 | 28.2 |
| S21 | | | | -0.2 | | |
| S22 | Filter 30 | Plane | Infinity | -0.21 | 1.523 | 54.5 |
| S23 | | Plane | Infinity | -0.29999979 | | |
| S24 | Image sensor 20 | Plane | Infinity | 0 | | |

Table 2b

| Surface number | A4 | A6 | A8 | A10 | A12 | A14 | A16 | A18 |
|---|---|---|---|---|---|---|---|---|
| S1 | -8.06E-04 | 4.52E-06 | -1.67E-06 | 7.60E-08 | -1.74E-09 | 1.31E-12 | | |
| S2 | -7.74E-04 | -2.92E-06 | -5.03E-07 | 2.20E-08 | -5.72E-10 | | | |
| S8 | 9.93E-05 | -6.02E-05 | 1.18E-05 | -2.92E-07 | -1.27E-07 | 1.14E-08 | | |
| S9 | -2.53E-05 | -3.12E-04 | 7.36E-05 | -9.60E-06 | 8.09E-07 | -2.44E-08 | | |
| S10 | 6.24E-03 | -1.95E-03 | 3.48E-04 | -3.17E-05 | 1.34E-06 | -1.75E-08 | | |
| S11 | 7.86E-03 | -2.57E-03 | 4.72E-04 | -3.60E-05 | 6.41E-07 | 3.17E-08 | | |
| S12 | 4.54E-03 | -7.27E-04 | 1.18E-04 | 2.54E-05 | -4.78E-06 | 1.94E-07 | | |
| S13 | 3.63E-03 | -1.35E-03 | 4.35E-04 | -5.69E-05 | 3.65E-06 | -1.06E-07 | | |
| S14 | -3.47E-02 | 1.93E-03 | 6.52E-04 | -1.98E-04 | 2.08E-05 | -7.49E-07 | | |
| S15 | -2.65E-02 | -1.23E-03 | 1.15E-03 | -2.01E-04 | 1.14E-05 | 7.39E-08 | | |
| S16 | 2.21E-02 | -3.37E-03 | -6.93E-04 | 7.54E-04 | -1.95E-04 | 2.33E-05 | -1.11E-06 | |
| S17 | 1.11E-02 | 3.60E-03 | -3.51E-03 | 1.31E-03 | -2.47E-04 | 2.33E-05 | -8.79E-07 | |
| S18 | -4.38E-03 | 1.46E-02 | -8.05E-03 | 2.48E-03 | -4.65E-04 | 5.19E-05 | -3.12E-06 | 7.70E-08 |
| S19 | 1.37E+00 | 8.56E-02 | 1.04E-01 | 2.36E-02 | 9.55E-03 | 8.10E-03 | 2.20E-03 | 1.22E-03 |

An aspheric surface of the long-focus lens 10 in Table 2a may be defined by using, but not limited to, the following aspheric curve equation:

$$z = \frac{cr^2}{1 + \sqrt{1 - (1+k)c^2 r^2}} + \sum_{i=1}^{N} \alpha_i r^{2i}$$

z is a relative distance between a point on the aspheric surface at a radial distance r from an optical axis and a tangent plane of an intersection point tangent to the optical axis on the aspheric surface; r is a vertical distance between a point on the aspheric curve and the optical axis; c is a curvature; k is a conic coefficient; and $\alpha_i$ is an ith-order aspheric coefficient. For details, refer to Table 2b.

Table 2c

| Parameter | Fs | Fno | FOV | F1 | F1/Fs |
|-----------|------|------|------|------|-------|
| Value | 18.7 | 2.0 | 26° | 43.0 | 2.299 |

Table 2c provides other parameter information of the optical lens 10. The other parameters include, for example, the overall focal length Fs of the optical lens 10, an aperture F-number Fno, a field of view FOV, the focal length F1 of the front lens element group (that is, the first lens element 11), and the ratio of F1 to Fs. F1/Fs is 2.299 (greater than the foregoing specified threshold 1.2), so that it can be ensured that an amount of rays reflected by the first reflector 18 to the rear lens element group does not vary significantly in different image stabilization states (that is, at different positions). That is, it can be ensured that imaging definition does not vary significantly in different image stabilization states, and it can be ensured that the optical lens 10 always has good imaging quality.

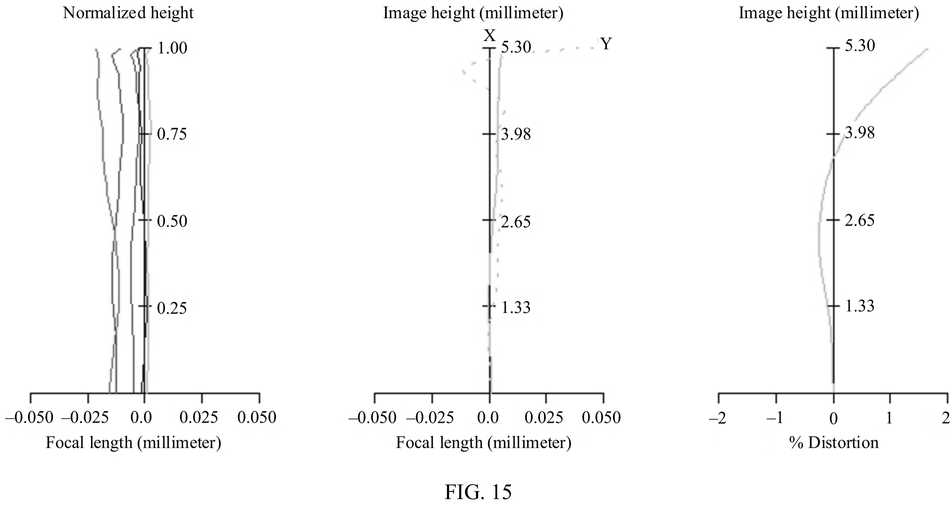

FIG. 15 is a simulation effect diagram of the optical lens 10 shown in FIG. 14 during focusing on a distant scene.

FIG. 15 includes an axial chromatic aberration curve diagram, an astigmatic field curve diagram, and a distortion diagram of the optical lens 10. The axial chromatic aberration curve diagram includes spherical aberration curves corresponding to different bands of a system (650 nm, 610 nm, 555 nm, 510 nm, and 470 nm shown in the figure). A physical meaning of the curve is a deviation of light of a corresponding wavelength emitted at a 0-degree field of view from an ideal image point after passing through an optical system. A horizontal coordinate of the curve diagram is a deviation value along an optical axis direction, and a vertical coordinate of the curve diagram is a normalized coordinate (height) at a pupil. Values shown in FIG. 15 are all small. During focusing on a distant scene, on-axis aberrations (a spherical aberration, a chromatic aberration, and the like) of the optical lens 10 are well corrected. The astigmatic field curve diagram is used to show deviations between convergence points of pencils in different fields of view and an ideal imaging plane. X is a beam in a sagittal direction, and Y is a beam in a meridian direction. A horizontal coordinate of the curve diagram is a deviation value along the optical axis, and a vertical coordinate of the curve diagram is a corresponding field of view. When a value of a field of view is excessively large, image quality in the field of view is poor or a high-order aberration exists. As shown in FIG. 15, curvatures of field in the two directions are small, and the system has a good depth of focus. The distortion diagram is used to represent relative deviations of convergence points of beams in different fields of view (actual image heights) from an ideal image height. Distortions shown in FIG. 15 are small, and it can be ensured that there is no obvious distortion in a picture.

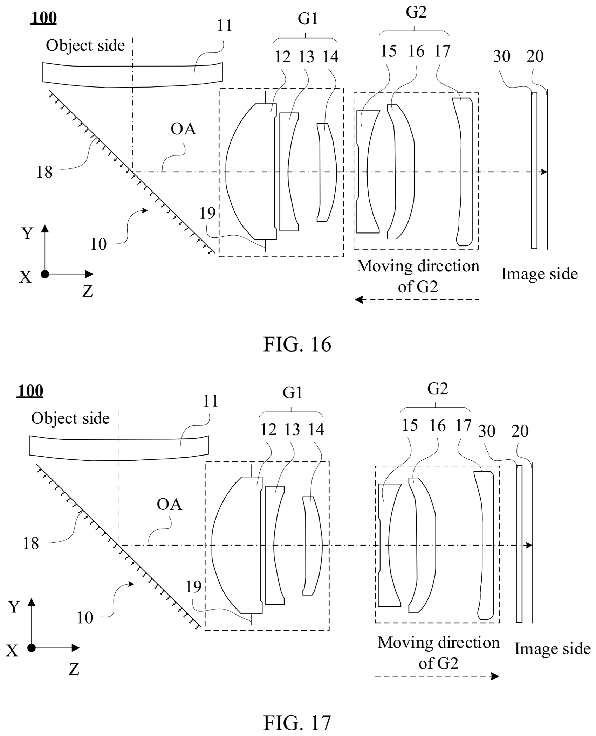

FIG. 16 is a diagram of a structure of the camera module 100 during focusing on a distant scene according to Embodiment 3 of this application. FIG. 17 is a diagram of a structure of the camera module 100 during focusing on a close-up scene according to Embodiment 3 of this application. Compared with Embodiment 1, in this embodiment, auto focus is performed by moving the second lens element group G2.

In this embodiment of this application, the first lens element group G1 is a lens element group at a fixed position, the second lens element group G2 is a focusing lens element group, and the second lens element group G2 can move on the optical axis (for example, the emergent optical axis OA1), to implement a focusing process. A single-group focusing manner is used in this embodiment, and a motion manner of a focusing structure of the optical lens 10 can be simplified, to simplify a focusing method.

As shown in FIG. 16, when the optical lens 10 focuses on the distant scene, a ray reflected by an object in the distant scene is imaged on the imaging surface of the image sensor 20 after passing through the optical lens 10, and the camera module 100 can capture an image of the distant scene. As shown in FIG. 17, when the optical lens 10 focuses on the close-up scene, the second lens element group G2 moves toward the image side along the optical axis, a ray reflected by an object in the close-up scene is imaged on the imaging surface of the image sensor 20 after passing through the optical lens 10, and the camera module 10 can capture an image of the close-up scene.

As shown in FIG. 16 and FIG. 17, in a focusing process of the optical lens 10 from the distant scene to the close-up scene, the first lens element group G1 does not move, the second lens element group G2 moves toward the image side along the optical axis, the distance between the first lens element group G1 and the second lens element group G2 is increased, and the effective focal length EFL of the optical lens 10 is decreased. In addition, the distance between the first lens element group G1 and the image sensor 20 is unchanged, and the distance between the second lens element group G2 and the image sensor 20 is decreased.

Based on data and a simulation result, the following presents a specific solution of the optical lens 10 shown in FIG. 16 in a possible embodiment.

Refer to both Table 3a and Table 3b. Table 3a shows curvature radiuses, thicknesses, refractive indexes (Nd), and Abbe numbers of the lens elements, the first reflector 18, the aperture stop 19, and the filter 30 when the optical lens 10 shown in FIG. 16 focuses on a distant scene in a possible embodiment. The thickness includes a thickness of a lens element, and also includes a distance between lens elements. A virtual surface is an imaginary surface, to facilitate optical design. Table 3b shows aspheric coefficients of the lens elements of the optical lens 10 shown in FIG. 16 in a possible embodiment.

Table 3a

| f (focal length)=18.7 mm; Fno (aperture)=2.2; FOV (field of view)=26° | | | | | | |
|---|---|---|---|---|---|---|
| Surface number | Description | Surface type | Curvature radius | Thickness (mm) | Refractive index | Abbe number |
| OBJ | Object surface | Plane | Infinity | Infinity | | |
| S1 | First lens element 11 | Aspheric | 165822.1193 | 0.82407464 | 1.545 | 56 |
| S2 | | Aspheric | -86.02143425 | 1.02592536 | | |
| S3 | | Plane | Infinity | 3.7 | | |
| S4 | Reflecting surface | Plane | Infinity | -3.7 | | |
| S5 | | Plane | Infinity | 2.428316001 | | |
| S6 | Projection plane of an image stabilization rotation point | Plane | Infinity | -2.428316 | | |
| S7 | | Plane | Infinity | -3.40209253 | | |
| STO | Aperture stop 19 | Plane | Infinity | 2.046296357 | | |
| S8 | Second lens element 12 | Aspheric | -5.238792277 | -2.53463321 | 1.545 | 56 |
| S9 | | Aspheric | 72.99805825 | -0.20765642 | | |
| S10 | Third lens element 13 | Aspheric | -34.80032962 | -0.51771078 | 1.67 | 19.4 |
| S11 | | Aspheric | -6.890196653 | -1.73907808 | | |
| S12 | Fourth lens element 14 | Aspheric | 327.9814773 | -0.92312462 | 1.567 | 37.7 |
| S13 | | Aspheric | 8.402315899 | -0.69 | | |
| S14 | Fifth lens element 15 | Aspheric | 7.868780209 | -0.7083289 | 1.545 | 56 |
| S15 | | Aspheric | -45.03799811 | -1.07873445 | | |
| S16 | Sixth lens element 16 | Aspheric | 22.99372492 | -0.81647445 | 1.67 | 19.4 |
| S17 | | Aspheric | 11.92248767 | -3.97044553 | | |
| S18 | Seventh lens element 17 | Aspheric | 5.957191631 | -0.65 | 1.545 | 56 |
| S19 | | Aspheric | 12.64387034 | -2.38520969 | | |
| S20 | Filter 30 | Plane | Infinity | -0.21 | 1.523 | 54.5 |
| S21 | | Plane | Infinity | -0.19999952 | | |
| S22 | Image sensor 20 | Plane | Infinity | 0 | | |

Table 3b

| Surface number | A4 | A6 | A8 | A10 | A12 | A14 | A16 | A18 |
|---|---|---|---|---|---|---|---|---|
| S1 | -3.37E-04 | -2.40E-06 | -1.71E-07 | 9.17E-09 | -1.88E-10 | -3.04E-13 | | |
| S2 | -3.54E-04 | -2.35E-06 | -1.80E-07 | 1.06E-08 | -2.24E-10 | | | |
| S8 | -4.68E-04 | -3.20E-06 | -1.67E-06 | -7.21E-09 | 9.55E-10 | -9.32E-11 | | |
| S9 | -2.79E-03 | 4.92E-04 | -8.71E-05 | 7.64E-06 | -3.41E-07 | 6.73E-09 | | |
| S10 | 5.99E-03 | -5.94E-04 | -8.56E-06 | 4.57E-06 | -3.24E-07 | 8.42E-09 | | |
| S11 | 8.73E-03 | -1.23E-03 | 8.98E-05 | -5.31E-06 | 1.69E-07 | -5.68E-09 | | |

(continued)

| Surface number | A4 | A6 | A8 | A10 | A12 | A14 | A16 | A18 |
|---|---|---|---|---|---|---|---|---|
| S12 | 4.22E-03 | 1.92E-04 | -1.72E-05 | 6.65E-06 | -8.06E-07 | 4.11E-08 | | |
| S13 | 2.38E-03 | 1.07E-04 | 7.92E-06 | 6.05E-07 | -1.55E-07 | 1.15E-08 | | |
| S14 | -1.20E-02 | 1.31E-03 | -1.37E-04 | 9.72E-06 | -3.95E-07 | 6.31E-09 | | |
| S15 | -1.06E-02 | 9.91E-04 | -1.07E-04 | 8.87E-06 | -4.82E-07 | 1.08E-08 | | |
| S16 | 5.61E-03 | -2.88E-06 | -1.68E-05 | 5.25E-06 | -1.39E-07 | -2.37E-08 | 9.77E-10 | |
| S17 | 4.23E-03 | 1.87E-05 | -2.05E-05 | 5.42E-06 | -4.85E-07 | 2.07E-08 | -4.87E-10 | |
| S18 | -1.63E-03 | 7.41E-04 | -1.40E-04 | 1.70E-05 | -1.34E-06 | 6.43E-08 | -1.75E-09 | 2.12E-11 |
| S19 | -8.84E-04 | 7.31E-04 | -1.18E-04 | 1.27E-05 | -8.80E-07 | 3.79E-08 | -9.25E-10 | 9.85E-12 |

An aspheric surface of the long-focus lens 10 in Table 3a may be defined by using, but not limited to, the following aspheric curve equation:

$$z = \frac{cr^2}{1 + \sqrt{1 - (1+k)c^2r^2}} + \sum_{i=1}^{N} \alpha_i r^{2i}$$

z is a relative distance between a point on the aspheric surface at a radial distance r from an optical axis and a tangent plane of an intersection point tangent to the optical axis on the aspheric surface; r is a vertical distance between a point on the aspheric curve and the optical axis; c is a curvature; k is a conic coefficient; and $\alpha_i$ is an $i^{th}$-order aspheric coefficient. For details, refer to Table 3b.

Table 3c

| Parameter | Fs | Fno | FOV | F1 | F1/Fs |
|---|---|---|---|---|---|
| Value | 18.7 | 2.2 | 26° | 157.0 | 8.396 |

Table 3c provides other parameter information of the optical lens 10. The other parameters include, for example, the overall focal length Fs of the optical lens 10, an aperture F-number Fno, a field of view FOV, the focal length F1 of the front lens element group (that is, the first lens element 11), and the ratio of F1 to Fs. F1/Fs is 8.396 (greater than the foregoing specified threshold 1.2), so that it can be ensured that an amount of rays reflected by the first reflector 18 to the rear lens element group does not vary significantly in different image stabilization states (that is, at different positions). That is, it can be ensured that imaging definition does not vary significantly in different image stabilization states, and it can be ensured that the optical lens 10 always has good imaging quality.

In this embodiment, when the optical lens 10 switches from a distant scene to a close-up scene at 60 millimeters, the second lens element group G2 moves toward the image side, and the distance between the first lens element group G1 and the second lens element group G2 is increased by 2.2 mm. Correspondingly, a distance between the second lens element group G2 and the filter 30 is decreased by 2.2 mm, to keep a height of the optical lens 10 unchanged.

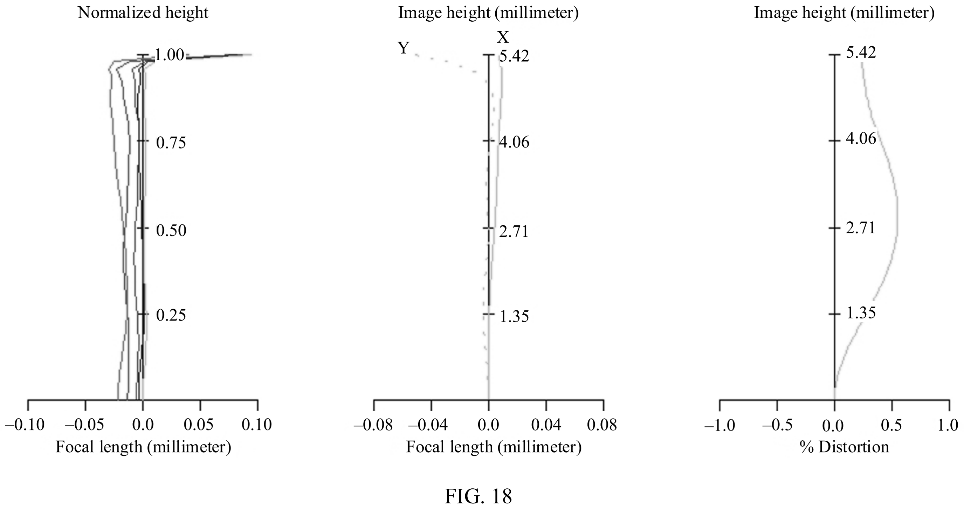

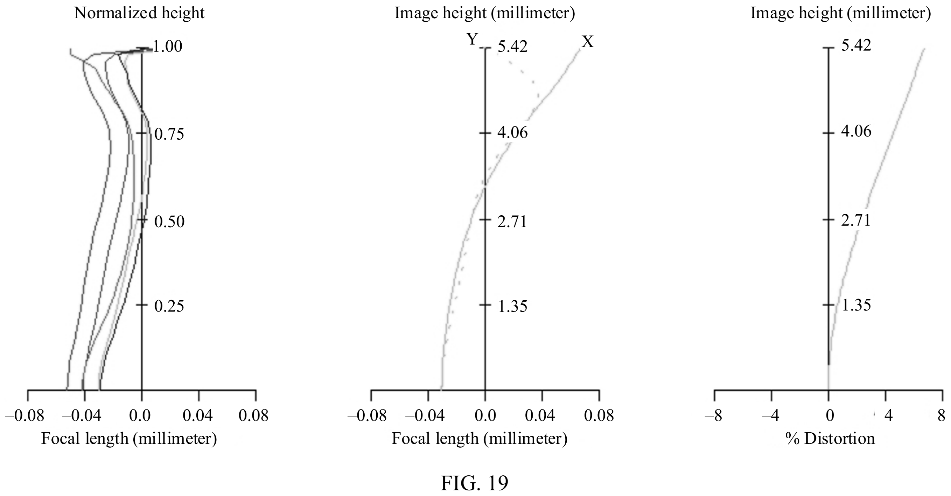

Refer to FIG. 18 and FIG. 19. FIG. 18 is a simulation effect diagram of the optical lens 10 during focusing on the distant scene shown in FIG. 16, and FIG. 19 is a simulation effect diagram of the optical lens 10 during focusing on the close-up scene at 60 millimeters shown in FIG. 17.

Both FIG. 18 and FIG. 19 include an axial chromatic aberration curve diagram, an astigmatic field curve diagram, and a distortion diagram of the optical lens 10. The axial chromatic aberration curve diagram includes spherical aberration curves corresponding to different bands of a system (650 nm, 610 nm, 555 nm, 510 nm, and 470 nm shown in the figure). A physical meaning of the curve is a deviation of light of a corresponding wavelength emitted at a 0-degree field of view from an ideal image point after passing through an optical system. A horizontal coordinate of the curve diagram is a deviation value along an optical axis direction, and a vertical coordinate of the curve diagram is a normalized coordinate (height) at a pupil. Values shown in FIG. 18 and FIG. 19 are all small. During focusing on a distant scene and a close-up scene, on-axis aberrations (a spherical aberration, a chromatic aberration, and the like) of the optical lens 10 are well corrected. The astigmatic field curve diagram is used to show deviations between convergence points of pencils in different fields of view and an ideal imaging plane. X is a beam in a sagittal direction, and Y is a beam in a meridian direction. A horizontal coordinate of the curve diagram is a deviation value along the optical axis, and a vertical coordinate of the curve diagram is a corresponding field of view. When a value of a field of view is excessively large, image quality in the field of view is poor or a high-order aberration exists. As shown in FIG. 18 and FIG. 19, curvatures of field in the two directions are small, and the system has a good depth of focus. The distortion diagram is used to represent relative deviations of convergence points of beams in different fields of view (actual image heights) from an ideal image height. Distortions shown in FIG. 18 and FIG. 19 are small, and it can be ensured that there is no obvious distortion in a picture.

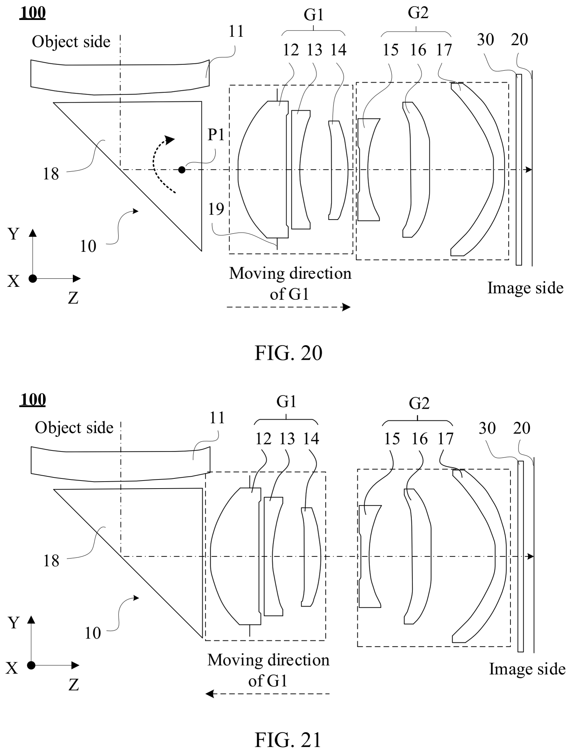

FIG. 20 is a diagram of a structure of the camera module 100 during focusing on a distant scene according to Embodiment 4 of this application. FIG. 21 is a diagram of a structure of the camera module 100 during focusing on a close-up scene according to Embodiment 4 of this application. Compared with the foregoing embodiment, in this embodiment, the first reflector 18 is a prism.

Based on data and a simulation result, the following presents a specific solution of the optical lens 10 shown in FIG. 20 in a possible embodiment.

Refer to both Table 4a and Table 4b. Table 4a shows curvature radiuses, thicknesses, refractive indexes (Nd), and Abbe numbers of the lens elements, the first reflector 18, the aperture stop 19, and the filter 30 when the optical lens 10 shown in FIG. 20 focuses on a distant scene in a possible embodiment. The thickness includes a thickness of a lens element, and also includes a distance between lens elements. A virtual surface is an imaginary surface, to facilitate optical design. Table 4b shows aspheric coefficients of the lens elements of the optical lens 10 shown in FIG. 20 in a possible embodiment.

Table 4a

| Surface number | Description | Surface type | Curvature radius | Thickness (mm) | Refractive index | Abbe number |
|---|---|---|---|---|---|---|
| OBJ | Object surface | Plane | Infinity | Infinity | | |
| S1 | First lens element 11 | Aspheric | 129735.0333 | 1.481247332 | 1.545 | 56 |
| S2 | | Aspheric | -59.11157638 | 0.368752668 | | |
| S3 | | Plane | Infinity | 3.7 | 1.74 | 28 |
| S4 | Reflecting surface | Plane | Infinity | -3.7 | 1.74 | 28 |
| S5 | | Plane | Infinity | 2.031657798 | | |
| S6 | Projection plane of an image stabilization rotation point | Plane | Infinity | -2.031657798 | | |
| S7 | | Plane | Infinity | -3.999506258 | | |
| STO | Aperture stop 19 | Plane | Infinity | 2.089367781 | | |
| S8 | Second lens element 12 | Aspheric | -5.073344328 | -2.41387398 | 1.545 | 56 |
| S9 | | Aspheric | 3321.772951 | -0.232622885 | | |
| S10 | Third lens element 13 | Aspheric | -15.30013945 | -0.5 | 1.67 | 19.4 |
| S11 | | Aspheric | -5.526886585 | -1.983989735 | | |
| S12 | Fourth lens element 14 | Aspheric | -43.52058653 | -0.776248362 | 1.567 | 37.7 |
| S13 | | Aspheric | 13.35398639 | -1.077531369 | | |
| S14 | Fifth lens element 15 | Aspheric | 8.383428314 | -0.5 | 1.545 | 56 |
| S15 | | Aspheric | -29.34188811 | -2.344493193 | | |
| S16 | Sixth lens element 16 | Aspheric | -75.6826049 | -0.880839395 | 1.67 | 19.4 |
| S17 | | Aspheric | 38.12634261 | -3.416399299 | | |
| S18 | Seventh lens element 17 | Aspheric | 4.819265382 | -0.65 | 1.545 | 56 |
| S19 | | Aspheric | 8.672691404 | -0.600003099 | | |
| S20 | Filter 30 | Plane | Infinity | -0.21 | 1.523 | 54.5 |
| S21 | | Plane | Infinity | -0.48705758 | | |

(continued)

| Surface number | Description | Surface type | Curvature radius | Thickness (mm) | Refractive index | Abbe number |
|---|---|---|---|---|---|---|
| S22 | Image sensor 20 | Plane | Infinity | 0 | | |

Table 4b

| Surface number | A4 | A6 | A8 | A10 | A12 | A14 | A16 | A18 |
|---|---|---|---|---|---|---|---|---|
| S1 | -3.43E-04 | -3.01E-06 | 1.44E-08 | -6.60E-10 | -5.60E-11 | 1.40E-12 | | |
| S2 | -3.85E-04 | -3.00E-06 | 5.36E-08 | -2.84E-09 | 4.06E-11 | | | |
| S8 | -4.48E-04 | -1.50E-05 | 1.70E-06 | -3.79E-07 | 2.49E-08 | -8.27E-10 | | |
| S9 | -3.07E-03 | 4.44E-04 | -6.50E-05 | 5.05E-06 | -2.08E-07 | 3.81E-09 | | |
| S10 | 6.00E-03 | -6.33E-04 | -2.72E-06 | 3.84E-06 | -2.47E-07 | 5.43E-09 | | |
| S11 | 9.20E-03 | -1.23E-03 | 6.85E-05 | -3.17E-06 | 1.36E-07 | -5.78E-09 | | |
| S12 | 3.70E-03 | 4.56E-04 | -6.44E-05 | 5.03E-06 | 8.51E-08 | -1.92E-09 | | |
| S13 | 2.08E-03 | 4.87E-04 | -7.72E-05 | 7.24E-06 | -8.68E-08 | -7.03E-09 | | |
| S14 | -1.21E-02 | 1.52E-03 | -1.92E-04 | 1.80E-05 | -9.63E-07 | 1.76E-08 | | |
| S15 | -1.04E-02 | 9.44E-04 | -7.69E-05 | 1.88E-06 | 2.44E-07 | -1.91E-08 | | |
| S16 | 7.02E-03 | -3.67E-04 | -1.66E-06 | 1.31E-05 | -2.16E-06 | 1.53E-07 | -4.27E-09 | |
| S17 | 6.53E-03 | -4.42E-04 | 2.04E-05 | 5.97E-06 | -1.05E-06 | 6.90E-08 | -1.70E-09 | |
| S18 | 1.18E-02 | -3.39E-03 | 4.29E-04 | -3.36E-05 | 1.79E-06 | -7.03E-08 | 1.87E-09 | -2.41E-11 |
| S19 | 1.67E-02 | -3.79E-03 | 4.68E-04 | -3.66E-05 | 1.92E-06 | -6.68E-08 | 1.39E-09 | -1.29E-11 |

An aspheric surface of the long-focus lens 10 in Table 4a may be defined by using, but not limited to, the following aspheric curve equation:

$$z = \frac{cr^2}{1 + \sqrt{1 - (1+k)c^2 r^2}} + \sum_{i=1}^{N} \alpha_i r^{2i}$$

z is a relative distance between a point on the aspheric surface at a radial distance r from an optical axis and a tangent plane of an intersection point tangent to the optical axis on the aspheric surface; r is a vertical distance between a point on the aspheric curve and the optical axis; c is a curvature; k is a conic coefficient; and $\alpha_i$ is an $i^{th}$-order aspheric coefficient. For details, refer to Table 4b.

Table 4c

| Parameter | Fs | Fno | FOV | F1 | F1/Fs |
|---|---|---|---|---|---|
| Value | 18.7 | 2.1 | 26° | 108.0 | 5.775 |

Table 4c provides other parameter information of the optical lens 10. The other parameters include, for example, the overall focal length Fs of the optical lens 10, an aperture F-number Fno, a field of view FOV, the focal length F1 of the front lens element group (that is, the first lens element 11), and the ratio of F1 to Fs. F1/Fs is 5.775 (greater than the foregoing specified threshold 1.2), so that it can be ensured that an amount of rays reflected by the first reflector 18 to the rear lens element group does not vary significantly in different image stabilization states (that is, at different positions). That is, it can be ensured that imaging definition does not vary significantly in different image stabilization states, and it can be ensured that the optical lens 10 always has good imaging quality.

In this embodiment, when the optical lens 10 switches from a distant scene to a close-up scene, for example, focuses on a close-up scene at 60 millimeters, the first lens element group G1 moves toward the object side, and the distance between the first lens element group G1 and the second lens element group G2 is increased by 2.2 mm. That is, a focusing stroke of the first lens element group G1 toward the object side is 2.2 mm. Compared with a conventional lens (generally, a focusing stroke needs to be greater than 4 mm), the focusing stroke is obviously shortened, and a focusing capability is strong.

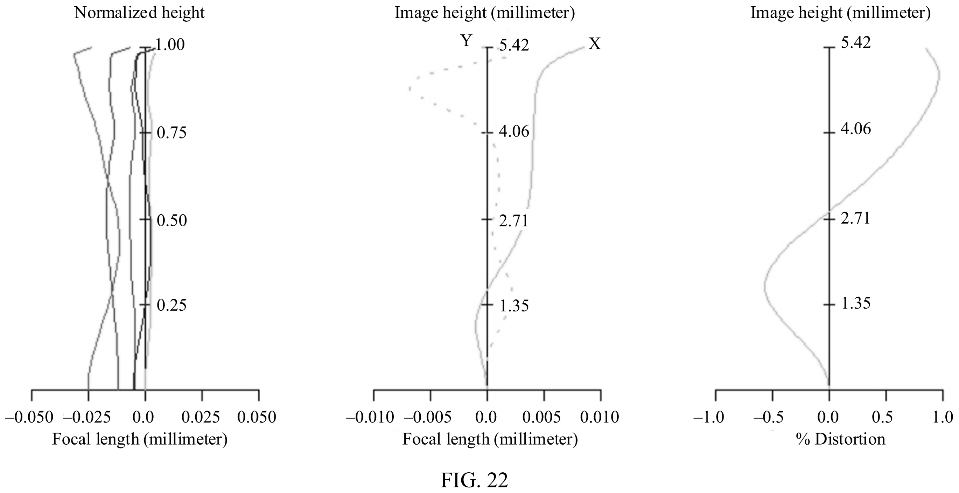

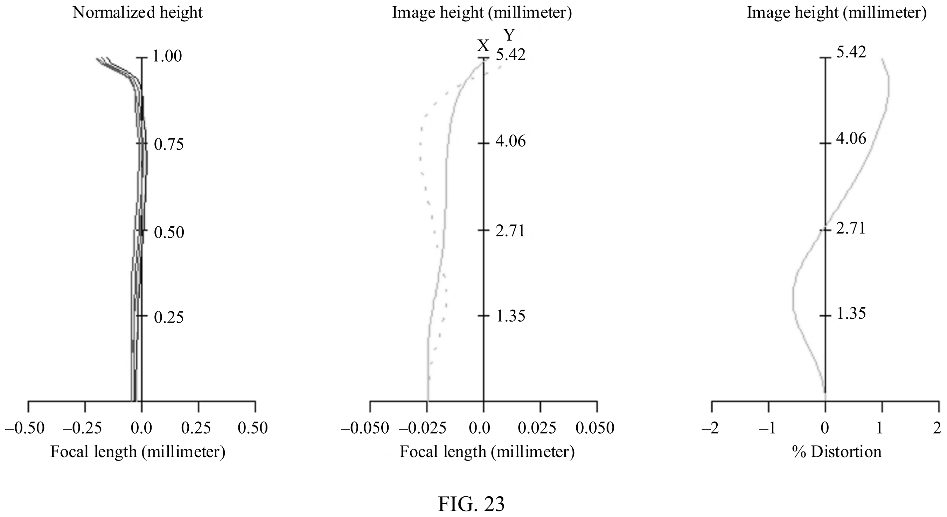

Refer to FIG. 22 and FIG. 23. FIG. 22 is a simulation effect diagram of the optical lens 10 during focusing on the distant scene shown in FIG. 20, and FIG. 23 is a simulation effect diagram of the optical lens 10 during focusing on the close-up scene at 60 millimeters shown in FIG. 21.

Both FIG. 22 and FIG. 23 include an axial chromatic aberration curve diagram, an astigmatic field curve diagram, and a distortion diagram of the optical lens 10. The axial chromatic aberration curve diagram includes spherical aberration curves corresponding to different bands of a system (650 nm, 610 nm, 555 nm, 510 nm, and 470 nm shown in the figure). A physical meaning of the curve is a deviation of light of a corresponding wavelength emitted at a 0-degree field of view from an ideal image point after passing through an optical system. A horizontal coordinate of the curve diagram is a deviation value along an optical axis direction, and a vertical coordinate of the curve diagram is a normalized coordinate (height) at a pupil. Values shown in FIG. 22 and FIG. 23 are all small. During focusing on a distant scene and a close-up scene, on-axis aberrations (a spherical aberration, a chromatic aberration, and the like) of the optical lens 10 are well corrected. The astigmatic field curve diagram is used to show deviations between convergence points of pencils in different fields of view and an ideal imaging plane. X is a beam in a sagittal direction, and Y is a beam in a meridian direction. A horizontal coordinate of the curve diagram is a deviation value along the optical axis, and a vertical coordinate of the curve diagram is a corresponding field of view. When a value of a field of view is excessively large, image quality in the field of view is poor or a high-order aberration exists. As shown in FIG. 22 and FIG. 23, curvatures of field in the two directions are small, and the system has a good depth of focus. The distortion diagram is used to represent relative deviations of convergence points of beams in different fields of view (actual image heights) from an ideal image height. Distortions shown in FIG. 22 and FIG. 23 are small, and it can be ensured that there is no obvious distortion in a picture.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An optical lens, comprising: a front lens element group, a first reflector (18), and a rear lens element group that are sequentially arranged in a direction from an object side to an image side, wherein the first reflector (18) is configured to reflect a ray from the front lens element group to the rear lens element group; and
the front lens element group is a fixed lens element group, and the first reflector (18) is rotatably disposed in the lens to implement optical image stabilization.

2. The optical lens according to claim 1, wherein the optical lens has an emergent optical axis (OA1) located on an image side of a center point (P2) of the first reflector (18), and the first reflector (18) is configured to rotate about a rotation point (P1); and

   a projection point (P3) of the rotation point (P1) on a straight line on which the emergent optical axis (OA1) lies is located on the emergent optical axis (OA1); or
   the projection point (P3) of the rotation point (P1) on the straight line on which the emergent optical axis (OA1) lies is located on a reverse extension line of the emergent optical axis (OA1), and an effective focal length EFL of the optical lens and a distance L between the projection point (P3) and the center point (P2) satisfy: L/EFL≤2.0.

3. The optical lens according to claim 2, wherein the first reflector (18) is configured to perform image stabilization on a pitch axis and image stabilization on a yaw axis, and the rotation point (P1) is an intersection point of the pitch axis and the yaw axis.

4. The optical lens according to claim 2 or 3, wherein the rear lens element group is configured to move along the emergent optical axis (OA1) as a whole to implement auto focus.

5. The optical lens according to claim 2 or 3, wherein the rear lens element group comprises a first lens element group (G1) and a second lens element group (G2), and the first lens element group (G1) or the second lens element group (G2) is configured to move along the emergent optical axis (OA1), to implement auto focus.

**6.** The optical lens according to claim 5, wherein a focal length of the first lens element group (G1) is positive, and a focal length of the second lens element group (G2) is negative.

**7.** The optical lens according to claim 5 or 6, wherein the first lens element group (G1) comprises at least two lens elements, an Abbe number of at least one lens element is less than 45, and the second lens element group (G2) comprises at least one lens element.

**8.** The optical lens according to any one of claims 1 to 7, wherein a focal length F1 of the front lens element group and an overall focal length Fs of the optical lens satisfy: |F1/Fs|>1.2.

**9.** The optical lens according to any one of claims 1 to 8, wherein the optical lens further comprises a second reflector (21) located on an image side of the rear lens element group, and the second reflector (21) is configured to deflect a ray from the rear lens element group.

**10.** The optical lens according to any one of claims 1 to 9, wherein a field of view of the optical lens is less than 60°.

**11.** The optical lens according to any one of claims 1 to 10, wherein an image height of the optical lens is greater than 2 millimeters.

**12.** The optical lens according to any one of claims 1 to 11, wherein a focal length of the rear lens element group is positive.

**13.** The optical lens according to any one of claims 1 to 12, wherein the first reflector (18) is a mirror or a prism.

**14.** A camera module, comprising an image stabilization motor and the optical lens according to any one of claims 1 to 13, wherein the image stabilization motor is configured to drive the first reflector (18) to implement optical image stabilization.

**15.** An electronic device, comprising a pose sensor, a processing unit, and the camera module according to claim 14, wherein the pose sensor is configured to: collect shake information of the electronic device, and send the shake information to the processing unit, and the processing unit is configured to control the image stabilization motor based on the shake information.

(a)

(b)

FIG. 1

Y

Translation

Yaw and pitch

Translation on X
and Y axes

Rotate

Pitch

Rotate

Yaw

Translation    X

**FIG. 2**

1

2

1

2

An image sensor moves

A lens moves

(a)

(b)

**FIG. 3**

Object side

1b 1b 1b 1b 1b 1b

3

1a

OA

2

Y

X

Z

Image side

## FIG. 4

1000

100

300

200

(a)

(b)

## FIG. 5

**100**

Object side

11

OA2

P1

OA1

18

P2

19

10

Y

X

Z

G1

12 13 14

G2

15 16 17

30 20

Image side

## FIG. 6

Electronic device 1000

Pose sensor 500

Processing unit 600

Camera module 100

First reflector 18

Image stabilization motor 40

Drive unit 41

## FIG. 7

FIG. 8

FIG. 9

FIG. 10

FIG. 11

FIG. 12

Normalized height

1.00

0.75

0.50

0.25

−5.0    −2.5    0.0    2.5    5.0

Focal length (millimeter)

Image height (millimeter)

X          Y      5.16

3.87

2.58

1.29

−0.10    −0.05    0.0    0.05    0.10

Focal length (millimeter)

Image height (millimeter)

5.16

3.87

2.58

1.29

−2      −1      0      1      2

% Distortion

FIG. 13

EP 4 741 903 A1

**100**

Object side

11

12 13 14 15 16 17

OA

21

18

19

10

Y

X

Z

30

20

Image side

FIG. 14

FIG. 15

FIG. 16

FIG. 17

FIG. 18

EP 4 741 903 A1

FIG. 19

**100**

Object side

11

G1

G2

12 13 14

15 16 17

30 20

P1

18

19

Y

X

Z

10

Moving direction
of G1

Image side

FIG. 20

**100**

Object side

11

G1

G2

12 13 14

15 16 17

30 20

18

Y

X

Z

10

Moving direction
of G1

Image side

FIG. 21

FIG. 22

Normalized height

1.00

0.75

0.50

0.25

−0.50  −0.25  0.0  0.25  0.50

Focal length (millimeter)

Image height (millimeter)

X  Y
5.42

4.06

2.71

1.35

−0.050  −0.025  0.0  0.025  0.050

Focal length (millimeter)

Image height (millimeter)

5.42

4.06

2.71

1.35

−2  −1  0  1  2

% Distortion

FIG. 23

EP 4 741 903 A1

## INTERNATIONAL SEARCH REPORT

| International application No. |
| --- |
| **PCT/CN2024/116143** |

| A. | CLASSIFICATION OF SUBJECT MATTER |
| --- | --- |

G02B 13/00(2006.01)i;  G02B27/64(2006.01)n;  H04N23/68(2023.01)n

According to International Patent Classification (IPC) or to both national classification and IPC

| B. | FIELDS SEARCHED |
| --- | --- |

Minimum documentation searched (classification system followed by classification symbols)

IPC:G02B13 G02B27 H04N23

Documentation searched other than minimum documentation to the extent that such documents are included in the fields searched

CNTXT, ENTXTC, VEN, CNKI, 万方, WANFANG: 防抖, 防震, 防振, 抖动, 震动, 振动, 手震, 手振, 手抖, 抗抖, ois, 反射镜, 反光镜, 棱镜, 菱镜, 对焦, 调焦, 合焦, 聚焦, 透镜, 镜头, 旋转, 转动, 前, 后, 第一, 第二, 第1, 第2, lens, anti-shake, reflect+, focus+, rotat+, first, secondly.

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 103676405 A (YULONG COMPUTER TELECOMMUNICATION SCIENTIFIC (SHENZHEN) CO., LTD.) 26 March 2014 (2014-03-26) description, paragraphs 48-77, and figures 1-12 | 1, 9, 13-15 |
| Y | CN 103676405 A (YULONG COMPUTER TELECOMMUNICATION SCIENTIFIC (SHENZHEN) CO., LTD.) 26 March 2014 (2014-03-26) description, paragraphs 48-77, and figures 1-12 | 2-5 |
| Y | CN 201514511 U (ALTEK CORP.) 23 June 2010 (2010-06-23) description, paragraphs 24-31, and figures 1-3 | 1-15 |
| Y | CN 1932573 A (SONY CORP.) 21 March 2007 (2007-03-21) description, pages 4, 5, 16, and 17, and figures 2A-6 | 1-6, 9, 13-15 |
| Y | CN 110488469 A (GUANGDONG XUYE OPTOELECTRONICS TECHNOLOGY CO., LTD.) 22 November 2019 (2019-11-22) description, paragraphs 53-63 | 1-5, 7, 9, 10, 12-15 |
| Y | CN 219936188 U (ZHEJIANG SUNNY OPTICS CO., LTD.) 31 October 2023 (2023-10-31) description, paragraphs 57-183 | 1-5, 8-15 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 November 2024** | **28 November 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/116143** |

**C.    DOCUMENTS CONSIDERED TO BE RELEVANT**

| Category* | Citation of document, with indication, where appropriate, of the relevant passages | Relevant to claim No. |
| --- | --- | --- |
| X | CN 101201462 A (SAMSUNG ELECTRONICS CO., LTD.) 18 June 2008 (2008-06-18) description, pages 4-11 | 1, 9, 13-15 |
| X | CN 116699795 A (HONOR DEVICE CO., LTD.) 05 September 2023 (2023-09-05) description, paragraphs 164-174, and figures 10-12 | 1, 9, 13-15 |
| A | JP 2006005587 A (SHARP K. K.) 05 January 2006 (2006-01-05) entire document | 1-15 |

Form PCT/ISA/210 (second sheet) (July 2022)

**INTERNATIONAL SEARCH REPORT**
Information on patent family members

International application No.

**PCT/CN2024/116143**

| Patent document cited in search report | | | Publication date (day/month/year) | Patent family member(s) | | | Publication date (day/month/year) |
|---|---|---|---|---|---|---|---|
| CN | 103676405 | A | 26 March 2014 | None | | | |
| CN | 201514511 | U | 23 June 2010 | None | | | |
| CN | 1932573 | A | 21 March 2007 | JP | 2000515255 | A | 14 November 2000 |
| | | | | JP | 2004355010 | A | 16 December 2004 |
| | | | | JP | 4016211 | B2 | 05 December 2007 |
| | | | | WO | 9749003 | A1 | 24 December 1997 |
| | | | | AU | 3166097 | A | 07 January 1998 |
| | | | | JP | 2007226230 | A | 06 September 2007 |
| | | | | JP | 4151730 | B2 | 17 September 2008 |
| | | | | EP | 0906587 | A1 | 07 April 1999 |
| | | | | EP | 0906587 | B1 | 04 September 2002 |
| | | | | EP | 0906587 | B2 | 07 January 2009 |
| | | | | AU | 3166097 | A | 07 January 1998 |
| | | | | CN | 1225180 | A | 04 August 1999 |
| | | | | DE | 69715198 | E | 10 October 2002 |
| | | | | US | 2004105025 | A1 | 03 June 2004 |
| | | | | CN | 1532622 | A | 29 September 2004 |
| | | | | CN | 1184526 | C | 12 January 2005 |
| | | | | CN | 100460920 | C | 11 February 2009 |
| | | | | CN | 100585485 | C | 27 January 2010 |
| | | | | US | 7554597 | B2 | 30 June 2009 |
| CN | 110488469 | A | 22 November 2019 | CN | 110488469 | B | 12 November 2021 |
| CN | 219936188 | U | 31 October 2023 | CN | 116224551 | A | 06 June 2023 |
| CN | 101201462 | A | 18 June 2008 | JP | 2014098931 | A | 29 May 2014 |
| | | | | JP | 5836408 | B2 | 24 December 2015 |
| | | | | EP | 1931135 | A1 | 11 June 2008 |
| | | | | JP | 2008139893 | A | 19 June 2008 |
| | | | | KR | 20080050880 | A | 10 June 2008 |
| | | | | KR | 100871566 | B1 | 02 December 2008 |
| | | | | US | 2008129831 | A1 | 05 June 2008 |
| CN | 116699795 | A | 05 September 2023 | None | | | |
| JP | 2006005587 | A | 05 January 2006 | JP | 4225948 | B2 | 18 February 2009 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311648143